Europäisches Patentamt

European Patent Office

Office européen des brevets

(19)

(11) **EP 1 115 504 B1**

(12) **EUROPÄISCHE PATENTSCHRIFT**

(45) Veröffentlichungstag und Bekanntmachung des
Hinweises auf die Patenterteilung:
**12.02.2003 Patentblatt 2003/07**

(21) Anmeldenummer: **99946141.1**

(22) Anmeldetag: **08.09.1999**

(51) Int Cl.⁷: **B05D 7/00**

(86) Internationale Anmeldenummer:
**PCT/EP99/06607**

(87) Internationale Veröffentlichungsnummer:
**WO 00/016912 (30.03.2000 Gazette 2000/13)**

(54) **KRATZFESTER SOL-GEL-ÜBERZUG FÜR PULVERSLURRY-KLARLACKE**

SCRATCH-RESISTANT SOL-GEL COATING FOR CLEAR POWDER-SLURRY LACQUER

REVETEMENT SOL-GEL RESISTANT AUX RAYURES POUR VERNIS EN POUDRE SOUS FORME
DE DISPERSIONS

(84) Benannte Vertragsstaaten:
**DE ES FR**

(30) Priorität: **23.09.1998 DE 19843581**

(43) Veröffentlichungstag der Anmeldung:
**18.07.2001 Patentblatt 2001/29**

(73) Patentinhaber: **BASF Coatings AG**
**48165 Münster (DE)**

(72) Erfinder:
• **BETZ, Peter**
**D-48165 Münster (DE)**

• **HINTZE-BRÜNING, Horst**
**D-48165 Münster (DE)**
• **EHLIG, Christel**
**D-48165 Münster (DE)**

(74) Vertreter: **Fitzner, Uwe, Dr. et al**
**Dres. Fitzner & Münch**
**Rechts- und Patentanwälte**
**Lintorfer Strasse 10**
**40878 Ratingen (DE)**

(56) Entgegenhaltungen:
**DE-A- 4 303 570        DE-A- 19 618 657**

**Beschreibung**

Die vorliegenden Erfindung betrifft ein Verfahren zur Herstellung eines lackierten Substrats, gemäß dem Oberbegriff des Patentanspruchs 1 sowie ein lackiertes Substrat gemäß dem Oberbegriff des Patentanspruchs 7. Die Erfindung betrifft ferner eine Verwendung des Substrats.

Automobilkarosserien sind größtenteils mit einem mehrschichtigen Lackaufbau versehen. Als letzte Überzugsschicht werden häufig Klarlacke aufgetragen. Hierfür können neuerdings auch sogenannte Pulverslurry-Klarlacke eingesetzt werden.

Bei Pulverslurry-Lacken handelt es sich um Pulverlacke in Form wäßriger Dispersionen. Derartige Slurries sind beispielsweise in der US Patentschrift US-A-4,268,542 und den deutschen Anmeldungen DE-A-196 18 657 und 199 12 661 beschrieben.

In neuerer Zeit wurden sogenannte Sol-Gel-Klarlacke auf Basis von siloxanhaltigen Lackformulierungen entwickelt, die durch Hydrolyse und Kondensation von Silanverbindungen erhalten werden. Diese Lacke, die als Überzugsmittel für Beschichtungen von Kunststoffen verwendet werden, werden beispielsweise in den deutschen Patentschriften DE-A-43 03 570, 34 07 087, 40 11 045, 40 25 215, 38 28 098, 40 20 316 oder 41 22 743 beschrieben.

Sol-Gel-Klarlacke verleihen Kunststoff-Substraten wie z. B. Brillengläsern oder Motorradhelm-Visieren eine sehr gute Kratzfestigkeit. Diese Kratzfestigkeit wird von den OEM (Original Equipment Manufacturing)-Klarlacken, die üblicherweise bei der Erstxackierung von Fahrzeugen verwendet werden, nicht erreicht. Seitens der Automobilindustrie wird nun die Anforderung gestellt, diese verbesserte Kratzfestigkeit auch auf die bei der Lackierung von Automobilen verwendeten Klarlackschichten zu übertragen.

Der Ersatz der üblicherweise in der Automobillackierung eingesetzten OEM-Klarlacke oder OEM-Pulverslurry-Klarlacke durch Sol-Gel-Klarlacke ist nicht möglich, da diese hierfür z. B. zu spröde sind und schlechte optische Eigenschaften (appearance) aufweisen. Vor allem sind die Sol-Gel-Klarlacke zu teuer. Der ökonomisch günstigere Einsatz der Sol-Gel-Klarlacke als zusätzliche Überzugsschicht über die bisher verwendeten Klarlacke bzw. Pulverslurry-Klarlacke ergibt Haftungsprobleme zwischen dem Klarlack und der Sol-Gel-Schicht, die insbesondere nach Steinschlag und bei Belastung durch Schwitzwasser auftreten.

Die Aufgabe der vorliegenden Erfindung ist daher die Bereitstellung eines eine Klarlackschicht enthaltenden Lackaufbaus, der gleichzeitig eine sehr gute Kratzfestigkeit und Haftung aufweist und ein Verfahren zur Herstellung dieses Lackaufbaus.

Diese Aufgabe wird erfindungsgemäß durch das Verfahren zur Herstellung eines lackierten Substrats nach Patentanspruch 1 sowie durch das lackierte Substrat nach Patentanspruch 7 und die Verwendung nach Patentanspruch 14 gelöst.

Zweckmäßige Weiterbildungen des Erfindung sind Geganstand der betreffenden abhängigen Ansprüche.

Es zeigt sich, daß nach dem erfindungsgemäßen Verfahren hergestellte Automobillackierungen eine sehr gute Kratzfestigkeit aufweisen, die mit den üblicherweise eingesetzten Klarlacksystemen nicht zu erreichen ist. Weiterhin ergab sich gegenüber den Klarlack/Sol-Gel-Klarlack-Systemen nach dem Stand der Technik eine hervorragende Haftung der Schichten, sogar bei Steinschlag oder nach der Belastung im Schwitzwasser, d. h. eine zehntätige Belastung der Schichten in einer Atmosphäre von 40 °C und 100% relativer Luftfeuchtigkeit. Auch die optischen Eigenschaften der so hergestellten Lackierungen sind gut, und es werden keine Risse im Kratzfest-Überzug festgestellt.

Nachstehend wird das erfindungsgemäße Verfahren näher erläutert.

Für das erfindungsgemäße Verfahren kann jedes denkbare Substrat verwendet werden. Beispielhaft seien Substrate aus Metall, Kunststoff, Glas oder Keramik genannt. Das bevorzugt eingesetzte Substrat ist ein Substrat aus Kunststoff oder insbesondere aus Metall. Das erfindungsgemäß eingesetzte Substrat kann jede denkbare Form, etwa die Form einer Fahrzeugkarosserie, insbesondere einer Autokarosserie, aufweisen. Weiter kann das Substrat auch einer Oberflächenbehandlung unterzogen worden sein, beispielsweise einer Galvanisierung oder einer Phosphatierung.

Gemäß dem erfindungsgemäßen Verfahren kann das Substrat gegebenenfalls mit einer oder mehreren Überzugsschichten versehen werden. Bei den hierfür eingesetzten Überzugsmitteln kann es sich um jedes nach dem Stand der Technik verwendete Überzugsmittel handeln. Es kann sich beispielsweise um wäßrige oder organische Lösemittel enthaltende flüssige Überzugsmittel oder um Überzugsmittel in Pulverform oder in Form einer Pulverslurry handeln. Sie können nach den nach dem Stand der Technik bekannten Verfahren, wie z. B. Walzen, Spritzen, Tauchen, Streuen oder mittels -Elektrotauchlackierung aufgebracht werden.

Bevorzugt wird das erfindungsgemäße Verfahren bei der für die Lackierung von Automobilen üblichen Mehrschichtlackierung verwendet. Bei dieser üblichen Mehrschichtlackierung werden beispielsweise eine Grundierung, ein Füllerschicht sowie Basis-, Decklack- und Klarlackschichten auf die Automobilkarosserie aufgetragen. Die für die jeweiligen Schichten eingesetzten Überzugsmittel sind dem Fachmann bekannt. Der Auftrag der Schichten auf die Karosserie kann so erfolgen, daß nach Auftrag einer Schicht diese getrocknet und/oder gehärtet wird, bevor die nächste Schicht aufgetragen wird, oder zwei oder mehrere Schichten werden im sogenannten Naß-in-Naß-Verfahren, bei dem diese Schichten gemeinsam getrocknet und/oder gehärtet werden, aufgetragen.

Bei dem bevorzugten Einsatz des erfindungsgemäßen Verfahrens erfolgt also eine für die Automobillackierung übliche Mehrschichtlackierung, wobei die Klarlackschicht aus dem erfindungsgemäß eingesetzten Pulverslurry-Klarlack/Sol-Gel-Klarlack gebildet wird.

Bevorzugt wird das Pulverslurry-Klarlack/Sol-Gel-Klarlack-System als Überzug von Basislacken, die vorzugsweise als Bestandteil einer Mehrschichtlackierung, insbesondere in der Automobilindustrie, vorliegen, verwendet. Besonders geeignet als Basislackschicht sind Wasserbasislacke auf Basis eines Polyesters, Polyurethanharzes und eines Aminoplastharzes. Üblicherweise werden hierbei die Basislacke, ohne zu vernetzen, angetrocknet, wonach die Pulverslurry-Klarlackschicht naß-in-naß aufgetragen wird.

Das erfindungsgemäße Verfahren wird außerdem bevorzugt für die kontinuierliche Beschichtung von Blechen oder Metallbändern nach dem Coil-Coating-Verfahren verwendet. Hierbei kann das Pulverslurry-Klarlack/Sol-Gel-Klarlack-System direkt auf die Metalloberfläche oder auf eine hierauf befindliche übliche und bekannte Primer-Schicht aufgetragen werden. Nicht zuletzt kommt das erfindungsgemäße Verfahren auch für die Beschichtung von folienbeschichteten Blechen und Substraten aus Holz oder Glas in Betracht. Demgemäß läßt sich das erfindungsgemäße Verfahren mit Vorteil nicht nur auf dem Automobilsektor, sondern auch auf den Gebieten der industriellen Lackierung und der Möbellackierung anwenden.

Bei Pulverslurry-Lacken handelt es sich um Pulverlacke in Form wäßriger Dispersionen. Pulverlacke, also Lacke in Pulverform, sind entwickelt worden, um die heutzutage bei der Beschichtung von Automobilkarosserien vorzugsweise eingesetzten Flüssiglacke, die zahlreiche Umweltprobleme verursachen, zu ersetzen. Der Einsatz von Pulverlacken erfordert eine andere Applikationstechnologie als der Einsatz von Flüssiglacken. Daher wurden Pulverlacke in Form wäßriger Dispersionen entwickelt, die sich mit der Flüssiglacktechnologie verarbeiten lassen.

Bei Pulverslurry-Lacken (auch als Pulverlack-Slurry bezeichnet) handelt es sich um Pulverlacke in Form wäßriger Dispersionen. Pulverslurry-Klarlacke sind dementsprechend Pulverklarlacke in Form wäßriger Dispersionen.

Im folgenden sind mit Pulverslurry-Lacken auch immer Pulverslurry-Klarlacke und mit Pulverlacke auch immer Pulverklarlacke gemeint.

Ein Pulverslurry-Lack besteht üblicherweise aus zwei Komponenten, nämlich dem Pulverlack I und einer wäßrigen Dispersion II. Die beiden Komponenten können erst auf dem Substrat zusammengebracht werden, z. B. indem der Pulverlack I auf das gegebenenfalls beschichtete Substrat aufgetragen und anschließend die wäßrige Dispersion II zugegeben wird, vorzugsweise wird der Pulverslurry-Lack durch Zusammengeben der beiden Komponenten vor dem Auftrag auf das Substrat gebildet.

Bei der ersten Komponente des erfindungsgemäß eingesetzten Pulverslurry-Klarlacks handelt es sich um einen Pulverklarlack I. Es können dabei alle dem Fachmann bekannten Pulverlacke eingesetzt werden, die sich zur Ausbildung einer Klarlackschicht eignen.

Es ist von Vorteil, wenn der Pulverklarlack I in einer ersten Variante

a) mindestens ein epoxidhaltiges Bindemittel mit einem Gehalt von, bezogen auf das Bindemittel, 0,5 bis 40 Gew.-% an einpolymerisierten glycidylgruppenhaltigen Monomeren und

b) als Vernetzungsmittel mindestens eine Polycarbonsäure, insbesondere eine geradkettige Dicarbonsäure, und/oder einen carboxyfunktionellen Polyester sowie gegebenenfalls mindestens ein Tris(alkoxicarbonylamino)triazin und/oder mindestens ein weiteres übliches und bekanntes Vernetzungsmittel

oder alternativ

a) mindestens ein oligomeres oder polymeres epoxidhaltiges Vernetzungsmittel mit einem Gehalt von, bezogen auf das Vernetzungsmittel, 0,5 bis 40 Gew.-% an einpolymerisierten glycidylgruppenhaltigen Monomeren und/oder ein niedermolekulares epoxidhaltiges Vernetzungsmittel sowie gegebenenfalls mindestens ein Tris(alkoxicarbonylamino)triazin und/oder mindestens ein weiteres übliches und bekanntes Vernetzungsmittel und

b) mindestens ein Carboxylgruppen enthaltendes Polymer als Bindemittel enthält, wobei beide Varianten

c) mindestens ein Polyol enthalten können.

Die Zusammensetzung des Pulverklarlacks I kann breit variieren und dem jeweiligen Verwendungszweck optimal angepaßt werden. Erfindungsgemäß ist es von Vorteil, wenn der Pulverklarlack 1, bezogen auf den jeweiligen Festkörper, die Bestandteile a), b) und c) in den folgenden Mengen enthält:

a) 55 bis 80, besonders bevorzugt 60 bis 78 und insbesondere 62 bis 75 Gew.-%,

b) 14 bis 30, besonders bevorzugt 17 bis 25 und insbesondere 18 bis 23 Gew.-% sowie

c) 0 bis 22, besonders bevorzugt 2 bis 22 und insbesondere 4 bis 20 Gew.-%.

Als epoxyfunktionelles Bindemittel a) fiir den Pulverklarlack I sind beispielsweise epoxidgruppenhaltige Polyacrylatharze geeignet, welche durch Copolymerisation von mindestens einem ethylenisch ungesättigten Monomer, das mindestens eine Epoxidgruppe in Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind beispielsweise aus den Patentschriften EP-A-0 299 420, DE-B-22 14 650, DE-B-27 49 576, US-A-4,091,048 oder US-A-3,781,379 bekannt.

Beispiele geeigneter zu verwendender Monomere, welche keine Epoxidgruppe im Molekül enthalten, sind Alkylester der Acryl- und Methacrylsäure, insbesondere Methylacrylat, Methylmethacrylat, Ethylacrylat, Ethylmethacrylat, n-Butylacrylat, n-Butylmethacrylat, sekundär-Butylacrylat, sekundär-Butylmethacrylat, tert.-Butylacrylat, tert.-Butylmethacrylat, Neopentylacrylat, Neopentylmethacrylat, 2-Ethylhexylacrylat oder 2-Ethylhexylmethacrylat; Amide der Acrylsäure und Methacrylsäure, insbesondere Acrylamid und Methacrylsäureamid; vinylaromatische Verbindungen, insbesondere Styrol, Methylstyrol oder Vinyltoluol; die Nitrile der Acrylsäure und Methacrylsäure; Vinyl- und Vinylidenhalogenide, insbesondere Vinylchlorid oder Vinylidenfluorid; Vinylester, insbesondere Vinylacetat und Vinylpropionat; Vinylether, insbesondere n-Butylvinylether; oder hydroxylgruppenhaltige Monomere, insbesondere Hydroxyethylacrylat, Hydroxyethylmethacrylat, Hydroxypropylacrylat, Hydroxypropylmethacrylat, 4-Hydroxybutylacrylat oder 4-Hydroxybutylmethacrylat.

Beispiele geeigneter zu verwendender epoxyfunktioneller Monomerer sind Glycidylacrylat, Glycidylmethacrylat oder Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht Mn (gelpermeationschromatographisch unter Verwendung eines Polystyrolstandards bestimmt) von 2000 bis 20000, vorzugsweise 3000 bis 10000, und eine Glasübergangstemperatur Tg von 30 bis 80, vorzugsweise 40 bis 70, besonders bevorzugt 40 bis 60 und insbesondere 48 bis 52 °C (gemessen mit Hilfe der Differential Scanning Calorimetry (DSC)) auf.

Die Herstellung des epoxidgruppenhaltigen Polyacrylatharzes weist keine Besonderheiten auf, sondern erfolgt nach den üblichen und bekannten Polymerisationsmethoden.

Der weitere wesentliche Bestandteil des Pulverklarlacks I ist das Vernetzungsmittel a) oder b).

Bei dem Vernetzungsmittel b) handelt es sich um Carbonsäuren, insbesondere gesättigte, geradkettige, aliphatische Dicarbonsäuren mit 3 bis 20 Kohlenstoffatomen im Molekül. An ihrer Stelle oder zusätzlich zu ihnen können auch carboxyfunktionelle Polyester verwendet werden. Ganz besonders bevorzugt wird Dodecan-1,12-dicarbonsäure verwendet.

Um die Eigenschaften der Pulverlacke I zu modifizieren, können noch andere Carboxylgruppen enthaltende Vernetzungsmittel b) in untergeordneten Mengen verwendet werden. Beispiele geeigneter zusätzlicher Vernetzungsmittel dieser Art sind gesättigte verzweigte oder ungesättigte geradkettige Di- und Polycarbonsäuren sowie die nachstehend als Bindemittel b) im Detail beschriebenen Polymere mit Carboxylgruppen.

Neben diesen Carboxylgruppen enthaltenden Vernetzungsmitteln b) können noch weitere Vernetzungsmittel vorhanden sein.

Hierbei handelt es sich vor allem um Tris(alkoxicarbonylamino)triazine und deren Derivate. Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxi-, Tris(butoxi- und/oder Tris(2-ethylhexoxicarbonylamino)triazine verwendet.

Bevorzugt sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen.

Die Tris(alkoxicarbonylamino)triazine und deren Derivate können auch im Gemisch mit weiteren herkömmlichen Vernetzungsmitteln verwendet werden. Hierfür kommen vor allem blockierte Polyisocyanate oder aminogruppenhaltige Vemetzer in Betracht. Ebenso sind Aminoplastharze, beispielsweise Melaminharze, verwendbar. Hierbei kann jedes für transparente Decklacke oder Klarlacke geeignete Aminoplastharz oder eine Mischung aus solchen Aminoplastharzen verwendet werden.

Erfindungsgemäß können die Pulverklarlacke I in einer zweiten Variante ein epoxyfunktionelles Vernetzungsmittel a) und ein Carboxylgruppen enthaltendes Bindemittel b) enthalten.

Beispiele geeigneter erfindungsgemäß zu verwendender Carboxylgruppen enthaltender Bindemittel b) sind beispielsweise Polyacrylatharze, welche durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppen im Molekül enthält, hergestellt werden.

Beispiele gut geeigneter erfindungsgemäß zu verwendender, Carboxylgruppen enthaltender Bindemittel b) sind die nachstehend unter der Ziffer 1. sowie den Ziffern 1.1 bis 1.4 beschriebenen Polyacrylate und Polymethacrylate mit einem Gehalt an einpolymerisierter Acrylsäure und/oder Methacrylsäure > 0 Gew.-%.

Beispiele geeigneter erfindungsgemäß zu verwendender oligomerer und polymerer epoxyfunktioneller Vernetzungsmittel a) sind die vorstehend beschriebenen epoxidgruppenhaltigen Bindemittel a).

Beispiele geeigneter erfindungsgemäß zu verwendender niedermolekularer epoxyfunktioneller Vernetzungsmittel a) sind niedermolekulare, mindestens zwei Glycidylgruppen enthaltende Verbindungen, insbesondere Pentaerythrittetraglycidylether oder Triglycidylisocyanurat.

Neben den epoxyfunktionellen Vernetzungsmitteln a) können die vorstehend beschriebenen sonstigen Vernetzungsmittel vorhanden sein.

Das epoxidgruppenhaltige Bindemittel a) und das Carboxylgruppen enthaltende Vernetzungsmittel b) der ersten erfindungsgemäßen Variante bzw. das Carboxylgruppen enthaltende Bindemittel b) und das epoxyfunktionelle Vernetzungsmittel a) der zweiten erfindungsgemäßen Variante werden im allgemeinen in einem solchen Verhältnis eingesetzt, daß pro Äquivalent Epoxidgruppen 0,5 bis 1,5, vorzugsweise 0,75 bis 1,25 Äquivalente Carboxylgruppen vorliegen. Die Menge der vorliegenden Carboxylgruppen kann in einfacher Weise durch Titration mit einer alkoholischen KOH-Lösung ermittelt werden.

Erfindungsgemäß enthält das epoxyfunktionelle Bindemittel a) oder das oligomere oder polymere epoxyfunktionelle Vernetzungsmittel a) vinylaromatische Verbindungen wie Styrol einpolymerisiert. Um die Gefahr der Rißbildung bei der Bewitterung zu begrenzen, liegt der Gehalt indes nicht über 35 Gew.-%, bezogen auf das Bindemittel a) oder das Vernetzungsmittel a). Bevorzugt werden 10 bis 25 Gew.-% einpolymerisiert.

Der Pulverklarlack I kann mindestens ein Polyol c) enthalten.

Als erfindungsgemäß zu verwendende Polyole c) kommen alle niedermolekularen Verbindungen, Oligomere und Polymere in Betracht, welche mindestens zwei, vorzugsweise mindestens drei primäre und/oder sekundäre Hydroxylgruppen aufweisen und den festen Zustand des Pulverklarlacks I nicht zerstören.

Beispiele geeigneter Oligomere und Polymere c) sind lineare und/oder verzweigte und/oder blockartig, kammartig und/oder statistisch aufgebaute Poly(meth)acrylate, Polyester, Polyurethane, acrylierte Polyurethane, acrylierte Polyester, Polylactone, Polycarbonate, Polyether, (Meth)Acrylatdiole, Polyharnstoffe oder oligomere Polyole.

Werden diese Oligomere und Polymere als Polyole c) verwendet, enthalten sie vorzugsweise keine Carboxylgruppen.

Diese Oligomere und Polymere sind dem Fachmann bekannt, und zahlreiche geeignete Verbindungen sind am Markt erhältlich.

Von diesen Oligomeren und Polymeren c) sind die Polyacrylate, die Polyester und/oder die acrylierten Polyurethane von Vorteil und werden deshalb bevorzugt verwendet.

Beispiele für besonders bevorzugte erfindungsgemäß zu verwendende Oligomere und Polymere c) sind

1. Polyacrylate mit einer Hydroxylzahl von 40 bis 240, vorzugsweise 60 bis 210, insbesondere 100 bis 200, einer Säurezahl von 0 bis 35, Glasübergangstemperaturen von -35 bis + 85 °C und zahlenmittleren Molekulargewichten $M_n$ von 1500 bis 300.000.

Die Glasübergangstemperatur der Polyacrylate wird bekanntermaßen durch Art und Menge der eingesetzten Monomere bestimmt. Die Auswahl der Monomeren kann vom Fachmann unter Zuhilfenahme der folgenden Formel (A) getroffen werden, nach welcher die Glasübergangstemperaturen näherungsweise berechnet werden können.

$$1/Tg = \sum_{n=1}^{n=x} W_n / Tg_n; \quad \sum_n W_n = 1 \qquad (A)$$

$Tg$ = Glasübergangstemperatur des Polyacrylatharzes
$W_n$ = Gewichtsanteil des n-ten Monomers
$Tg_n$ = Glasübergangstemperatur des Homopolymers aus dem n-ten Monomer
$x$ = Anzahl der verschiedenen Monomeren

Maßnahmen zur Steuerung des Molekulargewichts (z. B. Auswahl entsprechender Polymerisationinitiatoren, Verwendung von Kettenübertragungsmitteln oder spezieller Verfahren der Polymerisation usw.) gehören zum Fachwissen und müssen hier nicht näher erläutert werden.

1.1 Besonders bevorzugte Polyacrylate sind herstellbar indem (a1) 10 bis 92, vorzugsweise 20 bis 60 Gew.-%, eines Alkyl- oder Cycloalkylmethacrylats mit 1 bis 18, vorzugsweise 4 bis 13 Kohlenstoffatomen im Alkyl- oder Cycloalkylrest oder Mischungen aus solchen Monomeren, (a2) 8 bis 60, vorzugsweise 12,5 bis 50,0 Gew.-%, eines Hydroxyalkylacrylats oder eines Hydroxyalkylmethacrylats mit 2 bis 4 Kohlenstoffatomen im Hydroxyalkylrest oder Mischungen aus solchen Monomeren, (a3) 0 bis 5, vorzugsweise 0,7 bis 3 Gew.-% Acrylsäure oder Methacrylsäure oder Mischungen aus diesen Monomeren und (a4) 0 bis 50, vorzugsweise bis zu 30 Gew.-%, von von (a1), (a2) und (a3) verschiedenen, mit (a1), (a2) und (a3) copolymerisierbaren ethylenisch ungesättigten Monomeren oder Mischungen aus solchen Monomeren zu Polyacrylaten der vorstehend angegebenen Spezifikation polymerisiert werden.

Beispiele geeigneter (a1)-Komponenten sind Methyl-, Ethyl-, Propyl-, n-Butyl-, Isobutyl-, tert.-Butyl-, Pentyl-, Hexyl-, Heptyl- oder 2-Ethylhexylacrylat oder -methacrylat sowie Cyclohexyl-, tert.-Butylcyclohexyl- oder Isobornylacrylat oder -methacrylat.

Beispiele geeigneter (a2)-Komponenten sind Hydroxyethyl-, Hydroxypropyl- oder Hydroxybutyl- oder Hydroxymethylcyclohexylacrylat oder -methacrylat oder Addukte von (Meth)Acrylsäure und Epoxiden wie Versaticsäure[R]-glycidylester.

Beispiele geeigneter (a4)-Komponenten sind Vinylaromaten wie Styrol, Vinyltoluol, alpha- Methylstyrol, alpha-Ethylstyrol, kernsubstituierte Diethylstyrole, Isopropylstyrol, Butylstyrol und Methoxystyrole; Vinylether wie Ethylvinylether, n-Propylvinylether, Isopropylvinylether, n-Butylvinylether oder Isobutylvinylether; Vinylester wie Vinylacetat, Vinylpropionat, Vinylbutyrat, Vinylpivalat oder der Vinylester der 2-Methyl-2-ethylheptansäure; oder Allylether wie Trimethylolpropanmono-, -di- oder -triallylether oder ethoxilierter oder propoxilierter Allylalkohol.

1.2 Weitere Beispiele besonders bevorzugter Polyacrylate werden in der europäischen Patentanmeldung EP-A-0 767 185 und den amerikanischen Patentschriften US-A- 5 480 493, 5 475 073 oder 5 534 598 beschrieben.

1.3 Weitere Beispiele besonders bevorzugter Polyacrylate werden unter der Marke Joncryl[R] vertrieben, wie etwa Joncryl[R] SCX 912 und 922,5.

1.4 Weitere Beispiele für besonders bevorzugte Polyacrylate sind solche, welche erhältlich sind, indem (a1) 10 bis 51 Gew.-%, vorzugsweise 25 bis 41 Gew.-%, 4-Hydroxy-n-butylacrylat oder -methacrylat oder eine Mischung hiervon, insbesondere aber 4-Hydroxy-n-butylacrylat, (a2) 0 bis 36 Gew.-%, vorzugsweise 0,1 bis 20 Gew.-%, eines von (a1) verschiedenen hydroxylgruppenhaltigen Esters der Acrylsäure oder der Methacrylsäure oder eines Gemisches hiervon, (a3) 28 bis 85 Gew.-%, vorzugsweise 40 bis 70 Gew.-%, eines von (a1) und (a2) verschiedenen, aliphatischen oder cycloaliphatischen Esters der Methacrylsäure mit mindestens vier Kohlenstoffatomen im Alkoholrest oder eines Gemisches solcher Monomeren, (a4) 0 bis 3 Gew.-%, vorzugsweise 0,1 bis 2 Gew.-%, einer ethylenisch ungesättigten Carbonsäure oder einer Mischung aus solchen Säuren und (a5) 0 bis 20 Gew.-%, vorzugsweise 5 bis 15 Gew.-%, eines von (a1), (a3) und (a4) verschiedenen ungesättigten Monomeren oder einer Mischung aus solchen Monomeren zu einem Polyacrylat mit einer Hydroxylzahl von 60 bis 200, vorzugsweise von 100 bis 160, einer Säurezahl von 0 bis 35 und einem zahlmittleren Molekulargewicht $M_n$ von 1500 bis 10000 polymerisiert werden, wobei die Zusammensetzung der Komponente (a3) so gewählt wird, daß bei alleiniger Polymerisation dieser Komponente (a3) ein Polymethacrylat einer Glasübergangstemperatur von + 10 bis + 100 °C, vorzugsweise von + 20 bis + 60 °C, erhalten wird.

Beispiele geeigneter Komponenten (a2) sind Hydroxyalkylester der Acrylsäure und Methacrylsäure wie Hydroxyethyl- oder Hydroxypropylacrylat oder -methacrylat, wobei die Wahl so zu treffen ist, daß bei alleiniger Polymerisation dieser Komponente (a2) ein Polyacrylat einer Glasübergangstemperatur von 0 bis + 80 °C, vorzugsweise von + 20 bis + 60 °C erhalten wird.

Beispiele geeigneter Komponenten (a3) sind aliphatische Ester der Methacrylsäure mit vier bis 20 Kohlenstoffatomen in Alkoholrest wie n-Butyl -, Isobutyl -, tert. - Butyl -, 2-Ethylhexyl-, Stearyl- und Laurylmethacrylat; oder cycloaliphatische Ester der Methacrylsäure wegen Cyclohexylmethacrylat.

Beispiele geeigneter Komponenten (a4) sind Acrylsäure und/oder Methacrylsäure.

Beispiele geeigneter Komponenten (a5) sind vinylaromatische Kohlenwasserstoffe wie Styrol, alpha-Alkylstyrol oder Vinyltoluol; Amide der Acrylsäure und Methacrylsäure wie Methacrylamid und Acrylamid; Nitrite der Acrylsäure und Methacrylsäure; Vinylether oder Vinylester, wobei die Zusammensetzung dieser Komponente (a5) vorzugsweise so zutreffend ist, daß bei alleiniger Polymerisation der Komponenten (a5) ein Polyacrylat mit einer Glasübergangstemperatur von + 70 bis + 120 °C, insbesondere von + 80 bis + 100 °C resultiert.

1.5 Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

2. Polyesterharze, welche herstellbar sind, indem (al) mindestens eine cycloaliphatische oder aliphatische Polycarbonsäure, (a2) mindestens ein aliphatisches oder cycloaliphatisches Polyol mit mehr als zwei Hydroxylgruppen im Molekül, (a3) mindestens ein aliphatisches oder cycloaliphatisches Diol und (a4) mindestens eine aliphatische, lineare oder verzweigte gesättigte Monocarbonsäure in einem molaren Verhältnis von (a1) : (a2) : (a3) : (a4) = 1,0 : 0,2 bis 1,3 : 0,0 bis 1,1 : 0,0 bis 1,4, vorzugsweise 1,0: 0,5 bis 1,2 : 0,0 bis 0,6 : 0, 2 bis 0,9 zu einem Polyester oder Alkydharz umgesetzt werden.

Beispiele geeigneter Komponenten (a1) sind Hexahydrophthalsäure, 1,4-Cyclohexandicarbonsäure, Endomethylentetrahydrophthalsäure, Oxalsäure, Malonsäure, Bemsteinsäure, Glutarsäure, Adipinsäure, Pimelinsäure, Korksäure, Azelainsäure oder Sebacinsäure.

Beispiele geeigneter Komponenten (a2) sind Pentaerythrit, Trimethylolpropan, Triethylolethan und Glycerin.

Beispiele geeigneter Komponenten (a3) sind Ethylenglykol, Diethylenglykol, Propylenglykol, Neopentylglykol, 2-Methyl-2-propylpropandiol-1,3, 2-Methyl-2-butylpropandiol-1,3, 2,2,4-Trimethylpentandiol-1,5, 2,2,5-Trimethylhexandiol-1,6, Hydroxypivalinsäureneopentylglykolester oder Dimethylolcyclohexan.

Beispiele geeigneter Komponenten (a4) sind 2-Ethylenhexansäure, Laurinsäure, Isooctansäure, Isononansäure oder Monocarbonsäuremischungen, welche aus Kokosfett oder Palmkernfett gewonnen werden.

Die Herstellung der erfindungsgemäß bevorzugt verwendeten Polyester und Alkydharze ist allgemein bekannt und wird beispielsweise in dem Standardwerk Ullmanns Encyklopädie der technischen Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, bschrieben.

3. Polyurethane, wie sie in den Patentschriften EP-A-0 708 788, DE-A-44 01 544 oder DE-A-195 34 361 beschrieben werden.

Weitere Beispiele für geeignete Oligomere c) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cyloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht $M_w$ von 600 bis 1100 auf;

Beispiele geeigneter niedermolekularer Verbindungen c) sind verzweigte, cyclische und/oder acyclische $C_9$-$C_{16}$-Alkane, die mit mindestens zwei Hydroxylgruppen funktionalisiert sind, insbesondere Diethyloctandiole, sowie Cyclohexandimethanol, Hydroxypivalinsäureneopentylglykolester, Neopentylglykol, Trimethylolpropan oder Pentaerythrit.

Von den vorstehend beschriebenen Polyolen c) sind die carboxylgruppenfreien Polyacrylate und Polymethacrylate, welche vorstehend unter der Ziffer 1.1 beschrieben werden, von ganz besonderem Vorteil und werden deshalb ganz besonders bevorzugt verwendet.

Die Pulverklarlacke I können einen oder mehrere geeignete Katalysatoren für die Aushärtung der Epoxidharze enthalten. Beispiele geeigneter Katalysatoren sind Phosphonium- und Tetraalkylammoniumsalze organischer und anorganischer Säuren, Amine, Imidazol und Imidazolderivate. Die Katalysatoren werden im allgemeinen in Mengen von 0,001 bis 2 Gew.-%, bezogen auf das Gesamtgewicht der Epoxidgruppen enthaltenden Komponente a) oder b) sowie der Carboxylgruppen enthaltenden Komponente b) oder a), verwendet.

Beispiele geeigneter Phosphoniumsalze sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid oder Tetrabutylphosphonium-Acetat-Essigsäurekomplex. Diese und andere geeignete Phosphonium-Katalysatoren werden beispielsweise in den Patentschriften US-A-3,477,990 oder der US-A-3,341,580 beschrieben.

Beispiele geeigneter Tetraalkylammoniumsalze sind Cetyltrimethylammoniumund Dicetyldimethylammoniumbromid.

Beispiele geeigneter Imidazol-Katalysatoren sind 2-Styrylimidazol, 1-Benzyl-2-methylimidazol, 2-Methylimidazol oder 2-Butylimidazol. Diese und weitere geeignete Imidazol-Katalysatoren werden in dem belgischen Patent Nr. 756 693 beschrieben.

Der Pulverklarlack I kann des weiteren Entgasungsmittel wie Benzoin, Verlaufsmittel auf der Basis von Polyacrylaten, Polysiloxanen oder Fluorverbindungen, UV-Absorber wie Triazine und Benztriazole, Radikalläer wie 2,2,6,6-Tetramethylpiperidin-Derivate, und/oder Antioxidantien wie Hydrazine, Phosphorverbindungen als Reduktionsmittel und 2,6-Di-tertbutylphenol-Derivate als Radikalfänger sowie weitere geeignete Hilfsstoffe und Additive enthalten.

Die Pulverklarlack-Slurry enthält, bezogen auf ihre Gesamtmenge, die Komponente I in einer Menge von 5 bis 80, vorzugsweise 10 bis 70, besonders bevorzugt 15 bis 60 und insbesondere 20 bis 50 Gew.-%.

Die Komponente II besteht im wesentlichen aus Wasser; vorteilhafterweise ist sie indes selbst eine Dispersion, welche

IIa) wenigstens einen nicht-ionischen Verdicker und ein Dispergiermittel sowie gegebenenfalls

IIb) Katalysatoren, Hilfsstoffe, Entschäumungsmittel, vorzugsweise carboxyfunktionelle Dispergiermittel, Netzmittel, Antioxidantien, UV-Absorber, Radikalfänger, geringe Mengen an Lösemitteln, Verlaufsmittel, Biozide, Vernetzungsmittel und/oder Wasserrückhaltemittel

enthält.

Erfindungsgemäß enthält die Komponente II, bezogen auf ihre Gesamtmenge,

0,01 bis 20, vorzugsweise 1 bis 15, besonders bevorzugt 2 bis 10 und insbesondere 5 bis 9 Gew.-% der Komponente IIa) sowie

0,001 bis 20, vorzugsweise 0,01 bis 15, besonders bevorzugt 0,1 bis 10 und insbesondere 1 bis 9 Gew.-% der Komponente IIb).

Die geeigneten nicht-ionischen Assoziativ-Verdicker weisen die folgenden Strukturmerkmale auf:

IIaa) ein hydrophiles Gerüst, das eine ausreichende Wasserlöslichkeit sicherstellt und

IIab) hydrophobe Gruppen, die zu einer assoziativen Wechselwirkung im wäßrigen Medium befähigt sind.

Beispiele geeigneter hydrophober Gruppen IIab) sind langkettige Alkylreste wie Dodecyl-, Hexadecyl- oder Octadecyl-Reste oder Alkylarylreste wie Octylphenyloder Nonylphenyl-Reste.

Beispiele geeigneter hydrophiler Gerüste IIaa)sind Polyacrylate, Celluloseether oder, insbesondere, Polyurethane, welche die hydrophilen Gruppen als Polymerbausteine enthalten. Hierbei sind als hydrophile Gerüste Polyurethane besonders bevorzugt, welche Polyetherketten, vorzugsweise aus Polyethylenoxid, als Bausteine enthalten.

Als Dispergiermittel IIa) werden bevorzugt Polyurethanharze eingesetzt.

Die bevorzugt eingesetzten Polyurethanharze IIa) bestehen vorzugsweise aus

1. wenigstens einer organischen Komponente mit wenigstens zwei reaktiven Wasserstoffatomen,

2. einem monofunktionalen Ether und

3. einem Polyisocyanat.

Die organische Komponente der Polyurethanzusammensetzung IIa) umfaßt ein Polyesterpolyol, ein niedermolekulares Diol und/oder Triol oder Gemische davon. Gegebenenfalls kann ein trifunktionales Hydroxylgruppen enthaltendes Monomer mit verwendet werden.

In einer zweiten bevorzugten Ausführungsform umfaßt das Polyurethan IIa)

1. wenigstens eine organische Komponente mit wenigstens zwei reaktiven Wasserstoffatomen,

2. einen nicht-ionischen Stabilisator, der hergestellt wird durch Reaktion

i. eines monofunktionalen Polyethers mit einer Polyisocyanat enthaltenden Komponente zur Erzeugung eines Isocyanatzwischenproduktes und
ii. einer Komponente mit wenigstens einer aktiven Amin- und wenigstens zwei aktiven Hydroxylgruppen und

3. wenigstens einer Polyisocyanate enthaltenden Komponente.

Die organische Komponente umfaßt vorzugsweise ein Polyetherpolyesterpolyol, ein niedermolekulares Diol und/oder Triol oder Gemische davon.

Die Polyesterkomponente kann hergestellt werden durch Reaktion wenigstens einer Dicarbonsäure und wenigstens einer Alkoholkomponente, wobei der Alkohol wenigstens zwei Hydroxylgruppen enthält. Die Carbonsäurekomponente enthält zwei oder mehr Carboxylgruppen.

Zusätzlich zu den Carbonsäuren kann das Polyesterharz auch ein oder mehrere niedermolekulare Diole oder Triole enthalten. Einsetzbar ist grundsätzlich jedes Polyol.

Die eingesetzten Polyesterharze oder Gemische der Polyesterharze enthalten vorzugsweise endständige Hydroxylgruppen. Dies wird bewirkt durch Zusatz eines Überschusses an Polyolen.

Zur Synthese der Polyester können sowohl Monocarbonsäuren als auch Monoalkohole eingesetzt werden. Vorzugsweise sind die Monocarbonsäuren und/oder Monoalkohole jedoch in einer sehr geringen Gewichtsmenge in dem Polyesterharz enthalten.

Die vorzugsweise eingesetzten Polyesterdiolkomponenten umfassen zwischen 20 und 80 Gew.-% des Polyurethanharzes IIa). Vorzugsweise liegen die Mengen zwischen 50 und 70 Gew.-%. Ganz besonders bevorzugt werden 55 bis 65 Gew.-%.

Zur Herstellung des Polyurethans IIa) werden Polyesterpolyole mit einem Molekulargewicht zwischen 500 und 5000 eingesetzt. Bevorzugt werden Molekulargewichte zwischen 1000 und 3500.

Zusätzlich zu den Polyesterdiolen können die Polyurethanharze IIa) weitere organische Komponenten mit wenigstens zwei reaktiven Wasserstoffatomen enthalten. Hierbei handelt es sich vorzugsweise um Diole und Triole, Thiole und/oder Amine oder Gemische dieser Stoffe. Die Komponenten, die zur Synthese der Polyesterkomponente eingesetzt werden, können auch als separate Komponenten hier zum Einsatz kommen. D.h., als zusätzliche organische Komponente in dem Polyurethan IIa) kommen auch Di- oder Trialkohole, wie z.B. Neopentylglykol oder 1,6-Hexandiol in Betracht.

Das Molekulargewicht der eingesetzten Diole und/oder Triole in dem Polyurethanharz IIa) liegt zwischen 0 und 20 Gew.-%. Bevorzugt werden 1 bis 6 Gew.-%.

Das Polyurethanharz IIa) enthält ferner Polyisocyanate, insbesondere Diisocyanate. Die Isocyanate liegen zwischen 5 und 40 Gew.-% bezogen auf die Polyurethanmasse. Besonders bevorzugt werden 10 bis- 30 Gew.-% und ganz besonders 10 bis 20 Gew.-%. Zur Herstellung des Polyurethans IIa) wird schließlich ein monofunktioneller Polyether eingesetzt.

In einer zweiten Variante wird ein nicht-ionisches Dispergiermittel IIa) hergestellt, indem vorzugsweise ein monofunktionaler Polyether mit einem Diisocyanat zur Reaktion gebracht wird. Das entstandene Reaktionsprodukt wird sodann mit einer Komponente umgesetzt, die wenigstens eine aktive Amingruppe und wenigstens zwei aktive Hydroxylgruppen enthält.

In einer besonderen Ausführungsform umfaßt das Polyurethan IIa) ein Reaktionsprodukt aus

1. einem Polyesterpolyol, welches seinerseits ein Reaktionsprodukt aus einer Carbonsäure mit wenigstens zwei Carboxylgruppen und einer Komponente mit wenigstens zwei Hydroxylgruppen,

2. wenigstens einer niedermolekularen Komponente mit wenigstens zwei Hydroxylgruppen,

3. wenigstens einer polyisocyanathaltigen Komponente,

4. einem nicht-ionischen Stabilisator, hergestellt durch Reaktion eines monofunktionalen Ethers mit einem Polyisocyanat und anschließender Umsetzung des erhaltenen Reaktionsprodukts mit einer Komponente, die wenigstens eine aktive Amin- und wenigstens zwei aktive Hydroxylgruppen enthält.

In einer vierten Variante umfaßt das Polyurethan ein Reaktionsprodukt aus

1. einem Polyesterpolyol,

2. wenigstens einem niedermolekularen Diol oder Triol,

3. einem Polyisocyanat,

4. einem Trihydroxygruppen enthaltenden Monomer und

5. einem monofunktionalen Hydroxygruppen enthaltenden Polyether.

Die Polyester werden synthetisiert mit den oben beschriebenen Carbonsäurekomponenten und einem Überschuß an Polyolen. Der Überschuß an Polyolen wird so gewählt, daß vorzugsweise endständige Hydroxylgruppen entstehen. Die Polyole haben vorzugsweise eine Hydroxylfunktionalität von wenigstens zwei.

Das Polyesterharz besteht vorzugsweise aus einem oder mehreren Polyolen, vorzugsweise aus einem Diol. Vorzugsweise eingesetzte Diole sind Alkylenglykole, wie Ethylenglykol, Propylenglykol, Butylenglykol und Neopentylglykol, 1,6-Hexandiol oder andere Glykole, wie Bisphenol-A, Cyclohexandimethanol, Caprolactondiol, hydroxyalkyliertes Bisphenol und ähnliche Verbindungen.

Die erfindungsgemäß vorzugsweise eingesetzten niedermolekularen Diole sind aus dem Stand der Technik bekannt. Hierzu zählen aliphatische Diole, vorzugsweise Alkylenpolyole mit 2 bis 18 Kohlenstoffatomen. Beispiele hierfür sind 1,4-Butandiol, cycloaliphatische Diole, wie 1,2-Cyclohexandiol und Cyclohexandimethanol.

Als organische Polyisocyanate kommen erfindungsgemäß vorzugsweise solche in Betracht, die wenigstens zwei Isocyanatgruppen umfassen. Insbesondere werden die Diisocyanate bevorzugt, z.B. p-Phenylendiisocyanat, Biphenyl-4,4'diisocyanat, Toluoldiisocyanate (TDI), 3,3'-Dimethyl-4,4' Biphenylendiisocyanat, 1,4-Tetramethylendiisocyanat, 1,6-Hexamethylendiisocyanat (HDI), 2,2,4-Trimethylhexan-1,6-diisocyanat, Methylen-bis-(phenylisocyanate), 1,5-Naphthalindiisocyanat, Bis(isocyanatoethylfumarat), Isophorondiisocyanat (IPDI) und Methylen-bis-(4-cyclohexylisocyanat).

Neben den genannten Düsocyanaten werden auch andere multifunktionale Isocyanate verwendet. Beispiele sind 1,2,4 Benzoltriisocyanat und Polymethylenpolyphenylenpolyisocyanat.

Besonders bevorzugt ist der Einsatz von aliphatischen Diisocyanaten, z.B. 1,6-Hexamethylendiisocyanat, 1,4-Butylendiisocyanat, Methylen-bis-(4-cyclohexylisocyanat), Isophorondiisocyanat und 2,4-Toluoldiisocyanat.

Längerkettige Polyurethanharze IIa) können erhalten werden durch Kettenverlängerung mit diol- und/oder triolgruppenenthaltenden Komponenten. Besonders bevorzugt werden Kettenverlängerungsmittel mit wenigstens zwei reaktiven Wasserstoffatomen, z.B. Diolen, Thiolen, Diaminen, Alkanolaminen, Aminoalkylmercaptanen oder Hydroxyalkylmercaptanen oder Gemischen dieser Stoffe.

Beispiele für als Kettenverlängerungsmittel eingesetzte Diole sind 1,6-Hexandiol, Cyclohexandimethylol und 1,4-Butandiol. Ein besonders bevorzugtes Diol ist Neopentylglykol.

Die erfindungsgemäß eingesetzten Polyether sind vorzugsweise mono- oder difunktionelle Polyether. Zu den monofunktionellen zählen beispielsweise solche, hergestellt werden durch Polymerisation von Ethylenoxiden, Propylenoxiden oder Gemischen hiervon.

Das beschriebene Polyurethan IIa) kann mit herkömmlichen Vernetzern vermischt werden. Hierzu zählen vorzugsweise Aminoplastharze, z.B. Melamin. Ebenso können Kondensationsprodukte anderer Amine und Amide eingesetzt werden, z.B. Aldehydkondensate von Triazinen, Diazinen, Triazolen, Guanidinen, Guanaminen oder alkyl-und arylsubstituierte Derivate solcher Komponenten. Eine Beispiele solcher Komponenten sind N,N'-Dimethylharnstoff, Dicyandiamid, 2-Chloro-4,6-diamino-1,3,5-triazin, 6-Methyl-2,4-diamino-1,3,5-triazin, 3,5-Diamino-triazol, Triaminopyrimidin, 2-Mercapto-4,6-diaminopyrimidin, 2,4,6-Triethyltriamino-1,3,5-triazin und ähnliche Stoffe.

Als Aldehyd kommen vorzugsweise Formaldehyde in Betracht. Ebenso können Acetaldehyde, Crotonaldehyde, Acrolein, Benzaldehyde, Furfural zum Einsatz kommen.

Die Amin-Aldeyhdkondensationsprodukte können Methylol oder ähnliche Alkoholgruppen enthalten. Beispiele für einsetzbare Alkohole sind Methanol, Ethanol, Propanol, Butanol, Pentanol, Hexanol, Heptanol, Benzylalkohol und aromatische Alkohole, cyclische Alkohole, wie Cyclohexanol, Monoether oder Glykole sowie substituierte Alkohole, z.B. 3-Chloropropanol.

Neben den genannten Isocyanaten können auch blockierte Polyisocyanate als Vernetzungsmittel eingesetzt werden. Hierzu zählen beispielsweise organische Polyisocyanate wie Trimethylen-, Tetramethylen-, Hexamethylen-, 1,2-Propylen-, 1,2-Butylen- und 2,3-Butylen-diisocyanat. Ebenso sind einsetzbare Cycloalkankomponenten wie 1,3-Cyclopentan-, 1,4-Cyclohexan- und 1,2-Cyclohexandiisocyanate. Ferner sind aromatische Komponenten wie Phenylen-, p-Phenylen-, 4,4'-Diphenyl-, 1,5-Naphthalen- und 1,4-Naphthalendiisocyanate verwendbar. Darüber hinaus kommen aliphatisch-aromatische Komponenten wie 4,4'-Diphenylenmethan, 2,4- oder 2,6- Toluylen- oder Gemische hiervon, 4,4'-Toluidin- und 1,4 Xylylendiisocyanate in Betracht. Weitere Beispiele sind kernsubstituierte aromatische Komponenten wie 4,4'-Diphenyletherdiisocyanat und Chlordiphenylendiisocyanate. Einsetzbare Triisocyanate sind Triphenylmethan-4,4', 4"-triisocyanat, 1,3,5-Triisocyanatobenzol und 2,4,6-Triisocyanatotoluol. Verwendbare Tetraisocyanate sind schließlich 4,4'-Diphenyl-dimethylmethan- 2,2', 5,5'-tetraisocyanat.

Als Blockierungsmittel können aliphatische, cycloaliphatische aromatische Alkylmonoalkohole eingesetzt werden. Hierzu zählen beispielsweise Methyl-, Ethyl-, Chlorethyl-, Propyl-, Butyl-, Cyclohexyl-, Heptyl-, Octyl-, Nonyl-, 3,3,5-Trimethylhexanol-, Decyl- und Lauryl-Alkohol. Als phenolische Komponenten sind z.B. Phenole oder substituierte Phenole verwendbar. Beispiele hierfür sind Kresol, Xylenol, Nitrophenol, Chlorphenol, Ethylphenol, 1-Butylphenol und 2,5-Di-t-butyl-4-hydroxytoluol.

Weitere geeignete Blockierungsmittel sind tertiäre Hydroxylamine, z.B. Diethylethanolamin und Oxime, wie Methylethylketonoxim, Acetonoxim und Cyclohexanonoxim.

Im erfindungsgemäßen Verfahren werden außerdem besonders bevorzugt die Pulverklarlack-Slurries der nicht vorveröffentlichten deutschen Anmeldung 198 14 471.7 verwendet; sie werden hiermit ausdrücklich in das erfindungsgemäße Verfahren einbezogen.

Die Herstellung der festen Pulverlacke I erfolgt nach den bekannten Methoden (vgl. z. B. Produkt-Information der Firma BASF Lacke + Farben AG, "Pulverlacke", 1990) durch Homogenisieren und Dispergieren, beispielsweise mittels eines Extruders, Schneckenkneters u.ä. Nach Herstellung der Pulverlacke werden diese durch Vermahlen und gegebenenfalls durch Schichten und Sieben für die Dispergierung vorbereitet.

Aus dem Pulverlack I als erster Komponente und der wäßrigen Dispersion II als zweiter Komponente kann schließlich durch Naßvermahlung oder durch Einrühren von trocken vermahlenem Pulverlack I in die wäßrige Dispersion II der wäßrige Pulverslurry-Klarlack oder die Pulverklarlackdispersion erhalten werden. Die Naßvermahlung wird bevorzugt.

Nach der Dispergierung der Komponente I in der Komponente II wird gegebenenfalls vermahlen, der pH-Wert auf 4,0 bis 7,0, vorzugsweise 5,5 bis 6,5 eingestellt und filtriert.

Die mittlere Korngröße liegt beispielsweise zwischen 1 und 25 μm, vorzugsweise unter 20 μm, besonders bevorzugt zwischen 3 und 10 μm.

Der Dispersion II können vor oder nach der Naßvermahlung bzw. dem Eintragen des trockenen Pulverlacks I in Wasser, das gegebenenfalls schon Bestandteile der wäßrigen Dispersion enthält, ein Entschäumergemisch, ein Ammonium- und/oder Alkalisalz, ein Dispergiermittel IIa) auf der Basis von Polyurethanen, ein carboxyfunktionelles Dispergiermittel, Netzmittel und/oder ein Verdickergemisch sowie die anderen Additive zugesetzt werden. Vorzugsweise werden Entschäumer, Dispergier-, Netz- und/oder Verdickungsmittel zunächst in Wasser dispergiert. Dann werden kleine Portionen des Pulverklarlackes I eingerührt. Anschließend werden noch einmal Entschäumer, Dispergier-, Netz- und/oder Verdickungsmittel eindispergiert. Abschließend wird nochmals in kleinen Portionen Pulverklarlack I eingerührt.

Die Einstellung des pH-Wertes erfolgt erfindungsgemäß vorzugsweise mit Ammoniak oder Aminen. Der pH-Wert kann hierbei zunächst ansteigen, so daß eine stark basische Dispersion entsteht. Der pH-Wert fällt jedoch innerhalb mehrerer Stunden oder Tage wieder auf die oben angeführten Werte.

Der Pulverslurry-Klarlack läßt sich auf das gegebenenfalls beschichtete Substrat mit den aus der Flüssiglacktechnologie bekannten Methoden (z. B. Spritzer, Walzen, Sprühen oder Tauchen) auftragen. Insbesondere wird er mittels Spritzverfahren aufgetragen.

Üblicherweise werden für Beschichtungen Überzugsmittel auf Basis von organischen Polymeren verwendet. Dabei versteht man unter organischen Polymeren solche, die im wesentlichen aus Kohlenstoffatome enthaltenden Monomeren gebildet werden, wobei die Kohlenstoffatome in die entstehende Polymerkette eingebaut sind. Auch der Pulverslurry-Klarlack ist in diesem Sinne ein Überzugsmittel auf Basis organischer Polymere.

Im Vergleich dazu handelt es sich bei den sogenannten Sol-Gel-Klarlacken, welche für das erfindungsgemäße Verfahren wesentlich sind, um siloxanhaltige Lackformulierungen, die durch Umsetzung von hydrolysierbaren Siliciumverbindungen mit Wasser oder Wasser abspaltende Mitteln hergestellt werden können und die zur Verbesserung bestimmter Eigenschaften organische Bestandteile enthalten. Eine allgemeine Beschreibung von solchen Systemen findet sich beispielsweise in dem Artikel von Bruce M. Novak, "Hybrid Nanocomposite Materials-Between Inorganic Glasses and Organic Polymers", in Advanced Materials, 1993, 5, Nr.6, S. 422-433, oder in dem Vortrag von R. Kasemann, H. Schmidt, 15. International Conference, International Centre for Coatings Technology, Paper 7, "Coatings for mechanical and chemical protection based on organic-inorganic Sol-Gel Nanocomposites", 1993.

Die Basisreaktionen finden in einem Sol-Gel-Prozeß statt, bei dem Tetraorthosilikate gegebenenfalls in Gegenwart eines Co-Lösemittels hydrolisiert und kondensiert werden:

Hydrolyse

$$Si(OR)_4 + H_2O \rightarrow (RO)_3Si\text{-}OH + ROH$$

Kondensation

$$\text{-Si-OH} + \text{HO-Si-} \rightarrow \text{-Si-O-Si-} + H_2O$$

$$\text{-Si-OH} + \text{RO-Si-} \rightarrow \text{-Si-O-Si-} + ROH$$

wobei R eine Alkylgruppe, wie Methyl oder Ethyl sein kann. Häufig werden Tetramethylorthosilikat (TMOS) oder Tetraethylorthosilikat (TEOS) eingesetzt. Zur Katalyse der Reaktionen werden Säuren, Basen oder Fluoridionen eingesetzt.

Bei den erfindungsgemäß eingesetzten Sol-Gel-Klarlacken handelt es sich um siloxanhaltige Strukturen, die mit organischen Bestandteilen modifiziert sind (Ormocer = Organically Modified Ceramic).

Durch gezielte Hydrolyse und Kondensation von Kieselsäureestern und gegebenenfalls von Metallakoholaten werden Grundmaterialien für Beschichtungen hergestellt. Spezielle Eigenschaften erhalten die Systeme durch Einbau organisch modifizierter Kieselsäurederivate in das silicatische Netzwerk. Sie erlauben den Aufbau eines organischen Polymernetzwerks zusätzlich zum anorganischen Grundgerüst, wenn polymerisierbare organische Reste (z. B. Olefine, Epoxide) eingesetzt werden.

Die Modifizierung kann z. B. dadurch erfolgen, daß während der Hydrolyse und Kondensation der Ausgangsprodukte oder im Sol ein fertiges organisches Polymer anwesend ist (Typ I).

Enthält das anwesende Polymer funktionelle Gruppen, wie beispielsweise Trialkoxisilyleinheiten, $-CH_3Si(OR)_3$, die mit der anorganischen Phase reagieren können, erhält man ein Material, das kovalente Bindungen zwischen der anorganischen und der organischen Phase enthält (Typ II).

Desweiteren werden die organisch modifizierten Sol-Gel-Systeme durch gleichzeitige Polymerisation der anorganischen und organischen Phase erhalten (Typ III).

Auch bei diesen Typen können durch geeignete funktionelle Gruppen chemische Bindungen zwischen der anorganischen und der organischen Phase erhalten werden (Typ IV).

Es können aber auch Sol-Gel-Klarlacke eingesetzt werden, die durch Einbau von organisch modifizierten Kieselsäurederivaten in das silicatische Netzwerk erhalten werden, ohne daß polymerisierbare organische Reste zugegeben werden.

Die erfindungsgemäß eingesetzten Sol-Gel-Klarlacke können beispielsweise durch kontrollierte Hydrolyse und Kondensation von organisch modifiziertem hydrolysierbarem Silan erhalten werden. Dies kann gegebenenfalls in Anwesenheit von organischen Monomeren, Lösemitteln, organisch modifizierten hydrolysierbaren Metallalkoxiden sowie Metalloxiden in Form von Nanopartikeln durchgerührt werden.

Bei dem hydrolysierbaren Silan handelt es sich um Verbindungen der allgemeinen Formel (B),

$$SiR_4 \qquad\qquad (B)$$

worin die Reste R, die gleich oder verschieden sein können, ausgewählt sind aus hydrolysierbaren Gruppen, Hydroxygruppen und nicht hydrolysierbaren Gruppen.

Die nicht hydrolysierbaren Gruppen R in der allgemeinen Formel (B) werden vorzugsweise ausgewählt aus Alkyl, insbesondere mit 1 bis 4 C-Atomen, wie z.B. Methyl, Ethyl, Propyl und Butyl, Alkenyl, insbesondere mit 2 bis 4 C-Atomen wie z.B. Vinyl, 1-Propenyl, 2-Propenyl und Butenyl, Alkinyl, insbesondere mit 2 bis 4 C-Atomen wie Acetylenyl und Propargyl und Aryl, insbesondere mit 6 bis 10 C-Atomen, wie z.B. Phenyl und Naphthyl. Als nicht hydrolysierbare Gruppen R werden bevorzugt Alkylgruppen eingesetzt.

Beispiele für hydrolysierbare Gruppen R in der vorstehend genannten Formel (B) sind Alkoxy, insbesondere mit 1 bis 4 C-Atomen, wie z.B. Methoxi, Ethoxi, n-Propoxi, i-Propoxi und Butoxi, Aryloxi, insbesondere mit 6 bis 10 C-Atomen, z.B. Phenoxi, Acyloxi, insbesondere mit 1 bis 4 C-Atomen wie z.B. Acetoxi und Propionyloxi und Alkylcarbonyl wie z.B. Acetyl.

Neben den oben genannten bevorzugten hydrolysierbaren Gruppen R können als weitere, ebenfalls geeignete Gruppen erwähnt werden: Wasserstoff und Alkoxireste mit 5 bis 20, insbesondere 5 bis 10 Kohlenstoffatomen und alkoxisubstituierte Alkoxigruppen, wie z.B. beta-Methoxi-ethoxi. Besonders bevorzugte hydrolysierbare Gruppen R sind solche, die keinen Substituenten tragen und zu Hydrolyseprodukten mit niedrigem Molekulargewicht, wie z.B. niederen Alkoholen, wie Methanol, Ethanol, Propanol, n-Butanol, i-Butanol, sec-Butanol und tert-Butanol führen.

Wenigstens eine Gruppe R der Formel (B) muß eine hydrolysierbare Gruppe sein, Verbindungen der Formel (B) mit drei oder vier hydrolysierbaren Gruppen R sind besonders bevorzugt.

Weiterhin enthalten die hydrolysierbaren Silane bevorzugt eine nicht hydrolysierbare Gruppe R, die eine funktionelle Gruppe enthält. Bei diesen funktionellen Gruppen kann es sich beispielsweise um Epoxidgruppen, Aminogruppen, olefinisch ungesättigte Gruppen wie Vinyl- oder (Meth)acrylgruppen, Mercaptogruppen, Isocyanatgrupppen und/oder deren Umsetzungsprodukte mit weiteren reaktiven Verbindungen handeln.

Beispiele für gut geeignete erfindungsgemäß zu verwendende hydrolysierbare Silane sind Methyltriethoxisilan, Methyltrimethoxisilan, Tetramethylorthosilikat, Tetraethylorthosilikat, 3-Glycidyloxipropyltrimethoxysilan oder 3-Aminopropyltriethoxisilan.

Die Verbindungen der allgemeinen Formel (B) können ganz oder teilweise in Form von Vorkondensaten eingesetzt werden, d.h. Verbindungen, die durch teilweise Hydrolyse der Verbindungen der Formel (B), entweder allein oder im Gemisch mit anderen hydrolysierbaren Verbindungen entstanden sind.

Als verwendbare organische Monomere kommen alle dem Fachmann bekannten Monomeren zur Bildung von Polymeren in Betracht.

Beispiele geeigneter Monomere sind die vorstehend beschriebenen Monomeren, welche der Herstellung von Polyacrylaten, Polyestern oder Polyurethanen dienen, und die nachstehend beschriebenen Monomeren, welche der Herstellung der Acrylatcopolymerisate (A1) dienen.

Sind in der Mischung auch organische Monomere enthalten, wird die Hydrolyse und Kondensation der hydrolysierbaren Silane (B) bevorzugt so durchgeführt, daß sich aus den organischen Monomeren die entsprechenden Polymere bilden. Hierfür können die üblichen und bekannten Initiatoren, z. B. die nachstehend beschriebenen, eingesetzt werden (Typ III).

Vorzugsweise wird die Hydrolyse und Kondensation der hydrolysierbaren Silane (B) bzw. die Modifizierung des Sol-Gel-Klarlacks in der Gegenwart eines fertigen organischen Polymeren durchgeführt (Typ I).

Vorzugsweise wird dieses in organischen Lösemitteln gelöst verwendet.

Besonders bevorzugt werden Acrylatcopolymerisate (A1) verwendet, welche durch die Copolymerisation der nachstehend genannten Monomeren (a11) und (a13) sowie gegebenenfalls weiterer Monomerer (a12), (a14), (a51) und/oder (a16) hergestellt wird, wobei (a11) und (a13) sowie gegebenenfalls (a12), (a14), (a15) und (a16) in Art und Menge so ausgewählt werden, daß das Acrylatcopolymerisat(A1) die gewünschte OH-Zahl, Säurezahl und das gewünschte Molekulargewicht aufweist. Vorzugsweise weisen die Acrylatcopolymerisate (A1) eine Hydroxylzahl von 0 bis 240, besonders bevorzugt 0 bis 200 und insbesondere 0 bis 150, eine Säurezahl von 5 bis 100, besonders bevorzugt 10 bis 60 und insbesondere 20 bis 40, Glasübergangstemperaturen von -35 bis +85°C und zahlenmittlere Molekulargewichte Mn von 1.500 bis 300.000 auf.

Zur Herstellung der erfindungsgemäß eingesetzten Polyacrylatharze kann als Monomer (a11) jeder mit (a12), (a13), (a14), (a15 und (a16) copolymerisierbare (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate; verwendet werden. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-lH-inden-dimethanol- oder Cyclohexan-1,2-, -1,3- oder - 1,4-diol-di(meth)acrylat; Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen.

Als Monomere (a12) können mit (a11), (a12), (a13), (a14), (a15) und (a16) copolymerisierbare und von (a15) verschiedene, ethylenisch ungesättigte Monomere, die mindestens eine Hydroxylgruppe pro Molekül tragen und im wesentlichen säuregruppenfrei sind, wie Hydroxyalkylester der Acrylsäure, Methacrylsäure oder einer anderen alpha, beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; 1,4-Bis(hydroxymethyl)cyclohexan-, Octahydro-4,7-methano-1H-inden-dimethanoloder Methylpropandiolmonoacrylat, -monomethacrylat, -monoethacrylat, - monocrotonat, -monomaleinat, -monofumarat oder -monoitaconat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a12) gilt das für die höherfunktionellen Monomeren (a11) Gesagte sinngemäß. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a11) bis (a16). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Monomer (a13) kann jedes mindestens eine Säuregruppe, vorzugsweise eine Carboxylgruppe, pro Molekül tragende, mit (a11), (a12), (a14), (a15 und (a16) copolymerisierbare, ethylenisch ungesättigte Monomer oder ein Gemisch aus solchen Monomeren verwendet werden. Als Komponente (a13) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure; Crotonsäure, Maleinsäure, Fumarsäure und Itaconsäure. Weiterhin können ethylenisch ungesättigte Sulfon- oder Phosphonsäuren, bzw. deren Teilester, als Komponente (a13) verwendet werden. Als Komponente (a13) kommen desweiteren Maleinsäuremono(meth)acryloyloxyethylester, Bernsteinsäuremono(meth)acryloyloxyethylester und Phthalsäuremono(meth)acryloyloxyethylester in Betracht.

Als Monomere (a14) können ein oder mehrere Vinylester von in alpha-Stellung verzweigten Monocarbonsäuren mit 5 bis 18 C-Atomen im Molekül eingesetzt werden. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Monomer (a15) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a15) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Monomere (a16) können alle mit (a11), (a12), (a13), (a14) und (a15) copolymerisierbaren, von (a11), (a12), (a13) und (a14) verschiedenen, im wesentlichen säuregruppenfreien ethylenisch ungesättigten Monomere oder Gemische aus solchen Monomeren verwendet werden. Als Komponente (a16) kommen

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, und/oder Vinyltoluol;

- Nitrile wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth) acrylsäure;

in Betracht.

Vorzugsweise werden vinylaromatische Kohlenwasserstoffe, insbesondere Styrol, eingesetzt.

Die Art und Menge der Komponenten (a11) bis (a16) wird so ausgewählt, daß das Acrylatcopolymerisat (A1) die gewünschte OH-Zahl, Säurezahl und Glasübergangstemperatur aufweist. Besonders bevorzugt eingesetzte Acrylatcopolymerisate (A1)werden erhalten durch Polymerisation von

(a11) 20 bis 99 Gew.-%, bevorzugt 30 bis 50 Gew.-%, der Komponente (a11),

(a12) 0 bis 50 Gew.-%, bevorzugt 0 bis 40 Gew.-%, der Komponente (a12),

(a13) 1 bis 20 Gew.-%, bevorzugt 1 bis 10 Gew.-%, der Komponente (a13),

(a14) 0 bis 25 Gew.-% der Komponente (a14),

(a5) 0 bis 25 Gew.-% der Komponente (a15) und

(a16) 0 bis 30 Gew.-%, bevorzugt 10 bis 20 Gew.-%, der Komponente (a16),

wobei die Summe der Gewichtsanteile der Komponenten (a11) bis (a16) jeweils 100 Gew.-% beträgt.

Die Herstellung der erfindungsgemäß eingesetzten Acrylatcopolymerisate (A1) erfolgt in einem organischen Lösemittel oder Lösemittelgemisch, welches vorzugsweise frei ist von aromatischen Lösungsmitteln, und in Gegenwart mindestens eines Polymerisationsinitiators. Als Polymerisationsinitiatoren werden die fiir die Herstellung von Acrylatcopolymerisaten üblichen Polymerisationsinitiatoren eingesetzt.

Beispiele geeigneter Polymerisationsinitiatoren sind freie Radikale bildende Initiatoren, wie z.B. tert.-Butylperoxyethylhexanoat, Benzoylperoxid, Di-tert.-Amylperoxid, Azobisisobutyronitril und tert.-Butylperbenzoat genannt. Die Initiatoren werden bevorzugt in einer Menge von 1 bis 25 Gew.-%, besonders bevorzugt von 2 bis 10 Gew.-%, bezogen auf das Gesamtgewicht der Monomeren, eingesetzt.

Die Polymerisation wird zweckmäßigerweise bei einer Temperatur von 80 bis 200 °C, vorzugsweise 110 bis 180 °C, durchgeführt.

Bevorzugt werden als Lösemittel Ethylglykol, Ethoxyethylpropionat und Isopropoxypropanol eingesetzt.

Das Acrylatcopolymerisat (A1) kann nach einem Zweistufenverfahren hergestellt hergestellt werden, wenn neben den obligatorischen Monomeren (a11) und (a13) weitere Monomere verwendet werden. Hierbei wird

1. ein Gemisch aus den Monomeren (a11) und (a12) sowie gegebenenfalls (a14), (a15 und/oder (a16) oder ein Gemisch aus Teilen der Monomeren (a11) und (a12) sowie gegebenenfalls (a14), (a15) und/oder (a16) in einem organischen Lösemittel polymerisiert und

2. nachdem mindestens 60 Gew.-% des aus (a11) und (a12) sowie gegebenenfalls (a14) (a15 und/oder (a16) bestehenden Gemisches zugegeben worden sind, wird oder werden das Monomer (a13) und der gegebenenfalls vorhandene Rest der Monomeren (a1) und (a12) sowie gegebenenfalls (a14), (a15) und/oder (a16) zugegeben und weiter polymerisiert.

Daneben ist es aber auch möglich, die Monomeren (a14) und/oder (a15) zusammen mit zumindest einem Teil des Lösemittels vorzulegen und die restlichen Monomeren zuzudosieren. Außerdem können auch die Monomeren (a14) und/oder (a15) nur teilweise zusammen mit zumindest einem Teil des Lösemittels in die Vorlage gegeben werden und der Rest dieser Monomeren, wie oben beschrieben, zugegeben werden. Bevorzugt werden beispielsweise mindestens 20 Gew.-% des Lösemittels und ca. 10 Gew.-% der Monomeren (a14) und (a15) sowie gegebenenfalls Teilen der Monomeren (a11) und (a16) vorgelegt.

Bevorzugt ist außerdem ein Zweistufenverfahren, bei dem die erste Stufe 1 bis 8 Stunden, vorzugsweise 1,5 bis 4 Stunden, dauert und die Zugabe der Mischung aus (a13) und dem gegebenenfalls vorhandenen Rest der Monomeren (a11) und (a12) sowie gegebenenfalls (a14), (a15) und (a16) innerhalb von 20 bis 120 Minuten, vorzugsweise innerhalb von 30 bis 90 Minuten, erfolgt. Nach Beendigung der Zugabe der Mischung aus (a13) und dem gegebenenfalls vorhandenen Rest der Monomeren (a11) und (a12) sowie gegebenenfalls (a14), (a15) und (a16) wird so lange weiter polymerisiert, bis alle eingesetzten Monomeren im wesentlichen vollständig umgesetzt worden sind. Hierbei kann sich die zweite Stufe unmittelbar der ersten anschließen. Indes kann mit der zweiten Stufe erst nach einer gewissen Zeit, beispeilsweise nach 10 min bis 10 Stunden, begonnen werden.

Die Menge und Zugabegeschwindigkeit des Initiators wird vorzugsweise so gewählt, daß ein Acrylatcopolymerisat (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Acrylatcopolymerisate (A1) bei einem nicht allzu hohen Polymerisationsfestkörper, bevorzugt bei einem Polymerisationsfestkörper von 80 bis 50 Gew.-%, bezogen auf die Monomeren, polymerisiert und anschließend die Lösemittel teilweise destillativ entfernt, so daß die entstehenden Acrylatcopolymerisatlösungen (A1) einen Festkörpergehalt von bevorzugt 100 bis 60 Gew.-% aufweisen.

Für die Verwendung in dem erfindungsgemäßen Beschichtungsstoff wird der Festkörpergehalt der Acrylatcopolymerisatlösungen (A1) mit mindestens einem vorzugsweise aromatenfreien Lösemittel vorzugsweise auf unter 60 Gew.-%, besonders bevorzugt unter 40 Gew.-% und insbesondere unter 30 Gew.-% eingestellt.

Beispiel geeigneter Lösemittel sind Ethoxyethylpropionat und Butylglykol.

Die Herstellung der erfindungsgemäß zu verwendenden Acrylatcopolymerisate (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter Copolymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Erfindungsgemäß sind Taylorreaktoren vorteilhaft.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} (d/r_i)^{1/2} \qquad \text{(I)}$$

mit

$$d = r_a - r_i.$$

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungsystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Der Anteil des Acrylatcopolymerisats (A1) an den Sol-Gel-Klarlack kann sehr breit variieren und richtet sich vor allem danach, was für eine Flexibilität der hieraus hergestellte erfindungsgemäße Sol-Gel-Überzug aufweisen soll. Der Anteil ist nach oben begrenzt; so darf er nicht so hoch gewählt werden, daß es in dem erfindungsgemäßen Beschichtungsstoff zu einer Phasentrennung kommt oder die Härte und die Kratzfesigkeit des Sol-Gel-Überzugs zu stark abnimmt. Der Fachmann kann daher den jeweils optimalen Anteil aufgrund seines Fachwissens gegebenenfalls unter Zuhilfenahme einfacher Vorversuche bestimmen.

Gegebenenfalls kann zu den hydrolysierbaren Silanverbindungen (B) auch ein organisches Lösungsmittel wie ein aliphatischer Alkohol, wie Methanol, Ethanol, Propanol, Isopropanol oder Butanol, ein Ether wie Dimethoxiethan, ein Ester wie Dimethylglycolacetat oder Methoxipropylacetat und/oder 2-Ethoxiethanol oder ein Keton wie Aceton oder Methylethylketon hinzugegeben werden.

Gegebenenfalls sind auch organisch modifizierte Metallalkoxide enthalten. Hierbei handelt es sich um hydrolysierbare Metallalkoxide, wobei hinsichtlich der Definition der hydrolysierbaren Gruppen auf die entsprechenden vorstehend genannten Gruppen R für die Silane verwiesen werden kann. Bevorzugt werden als Metallalkoxide Aluminium-, Titan- oder Zirconiumalkoxide eingesetzt.

Gegebenenfalls sind in dem Sol-Gel-Klarlack Metalloxide als Nanopartikel enthalten. Diese Nanopartikel sind <50 nm. Es kann sich beispielsweise um $Al_2O_3$, $ZrO_2$ und/oder $TiO_2$ handeln.

Zur Herstellung des Sol-Gel-Klarlackes werden beispielsweise die Ausgangskomponenten (B) im gewünschten Mischungsverhältnis mit einer geringeren Wassermenge als der zur vollständigen Hydrolyse aller eingesetzten hydrolysierbaren Gruppen stöchiometrisch erforderlichen Menge vorkondensiert. Die unterstöchiometrische Wassermenge wird so zudosiert, daß lokale Überkonzentrationen vermieden werden. Dies gelingt z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80%igem Ethanol, oder Salzhydraten, z.B. $CaCl_2$ x $6H_2O$. Vorzugsweise erfolgt die Vorkondensation in Gegenwart eines Kondensationskatalysators jedoch in Abwesenheit eines organischen Lösungsmittels.

Als Kondensationskatalysatoren eignen sich protonen- oder hydroxylionenabspaltende Verbindungen und Amine. Spezielle Beispiele sind organisch oder anorganische Säuren, wie Salzsäure, Schwefelsäure, Phosphorsäure, Ameisensäure oder Essigsäure sowie organische oder anorganische Basen wie Ammoniak, Alkali- oder Erdalkalimetallhydroxide, z.B. Natrium, Kalium- oder Calciumhydroxid und im Reaktionsmedium lösliche Amine, z.B. niedere Alkylamine oder Alkanolamine. Hierbei sind flüchtige Säuren und Basen, insbesonder Salzsäure, Ammoniak und Triethylamin, sowie Essigsäure besonders bevorzugt

Die Vorkondensation wird z. B. so weit geführt, daß das entstehende Vorkondensat noch flüssige Konsistenz hat. Vorzugsweise weist er einen Festkörpergehalt von weniger als 80 Gew.-%, besonders bevorzugt weniger als 60 Gew.-% und insbesondere weniger als 40 Gew.-% auf. Da der erhaltene Vorkondensatlack hydrolyseempfindlich ist, sollte er, falls dies notwendig werden sollte, unter Feuchtigkeitsausschluß aufbewahrt werden.

Die anschließende hydrolytische Weiterkondensation des Vorkondensats kann in Gegenwart mindestens der Wassermenge, die zur Hydrolyse der noch verbliebenen hydrolysierbaren Gruppen stöchiometrisch erforderlich ist, vorzugsweise jedoch mit einer Überstöchiometrischen Wassermenge, erfolgen. Die Weiterkondensation erfolgt vorzugsweise in Gegenwart eines der vorstehend genannten Kondensationskatalysatoren.

Der Vorkondensatlack bzw. der durch Weiterkondensieren erhaltene Lack, der auch als Stammlack bezeichnet wird, ist als solcher als Sol-Gel-Klarlack verwendungsfähig.

Vorzugsweise werden ihm indes, sofern die Hydrolyse und Vorkondensation nicht in der Gegenwart des Acrylatcopolymerisats (A1) durchgerührt worden ist, für diesen Verwendungszweck die Acrylatcopolymerisatlösung (A1) zugesetzt.

Des weiteren werden dem Stammlack zu Zwecken der Herstellung des Sol-Gel-Klarlacks vorzugsweise eine Addiüvlösung, die auch als Primer bezeichnet wird, zugesetzt.

Sie enthält mindestens eine ethylenisch ungesättigte Verbindung, welche mindestens eine Epoxidgruppe aufweist. Ein Beispiel einer geeigneten ethylenisch ungesättigten Verbindung ist Glycidyl(meth)acrylat.

Des weiteren enthält sie mindestens ein Silan (B) mit mindestens einer nicht hydrolysierbaren Gruppe R, welche mindestens eine Epoxidgruppe aufweist. Ein Beispiel einer geeigneten Verbindung ist 3-Glycidyloxypropyltrimethoxysilan.

Nicht zuletzt enthält sie mindestens ein Addukt mindestens eines Silans (B) mit mindestens einer nicht hydrolysierbaren Gruppe R, welche mindestens eine Aminogruppe aufweist, und mindestens einem cyclischen ethylenisch ungesättigten Dicarbonsäureanhydrid. Ein Beispiel für ein geeignetes Silan (B) ist 3-Aminopropyltriethoxysilan. Beispiele für geeignete Dicarbonsäureanhydride sind Maleinsäureanhydrid und Itaconsäureanhydrid.

In der Additivlösung sind die ethylenisch ungesättigte Verbindung, das Silan (B) und das Addukt in einem Gewichtsverhältnis von (1 bis 10) : (1 bis 30) : 1, insbesondere (2 bis 6) : (10 bis 20) : 1 enthalten. Vorzugsweise liegt der Festkörpergehalt der Additivlösung unter 80 Gew.-%, vorzugsweise unter 60 Gew.-% und insbesondere unter 50 Gew.-%.

Auch der Anteil der Additivlösung an dem Sol-Gel-Klarlack kann breit variieren. Der Fachmann kann den jeweils optimalen Anteil aufgrund seines Fachwissens gegebenenfalls unter Zuhilfenahme einfacher Vorversuche bestimmen.

Besonders vorteilhafte Sol-Gel-Klarla enthalten, jeweils bezogen auf ihre Gesamtmenge, 5 bis 20, vorzugsweise 10 bis 15 und insbesondere 10,5 bis 14 Gew.-% der Acrylatcopolymerisatlösung (A1), 40 bis 85, vorzugsweise 45 bis 80 und insbesondere 50 bis 75 Gew.-% des Stammlacks sowie 0,5 bis 3, vorzugsweise 1 bis 2 und insbesondere 1,2 bis 1,7 Gew.-% der Additivlösung.

Hierbei ist es erfindungsgemäß von ganz besonderem Vorteil, wenn die Festkörpergehalte der Acrylatcopolymerisatlösung (A1), des Stammlacks und der Additivlösung derart gewählt werden, daß sie im Sol-Gel-Klarlack in einem Gewichtsverhältnis von Festkörper (A1) : Festkörper Stammlack : Festkörper Additivlösung von

- 1 bis 10: 30 bis 60 : 1

- vorzugsweise 2 bis 8 : 35 bis 55 : 1 und

- insbesondere 2,5 bis 6 : 40 bis 50 : 1

zueinander stehen.

Der Sol-Gel-Klarlack kann des weiteren mindestens einen Härter enthalten. Beispiele geeigneter Härter sind quateäre Ammoniumverbindungen wie Tetraalkylammoniumsalze, insbesondere Tetramethylammoniumiodid. Vorzugsweise kann der Härter in dem Sol-Gel-Klarlack in einer Menge von 0,001 bis 1 Gew.-% enthalten sein.

Ferner können den Sol-Gel-Klarlack noch übliche Lackadditive zugesetzt werden, z.B. organische Verdünnungsmittel, Verlaufsmittel, UV-Stabilisatoren, Viskositätsregler oder Antioxidantien. Es können dieselben Additive eingesetzt werden, die auch für übliche Überzugsmittel eingesetzt werden; beispielhaft sei auf die für den Pulverslurry-Klarlack genannten Verbindungen verwiesen.

Zwischen dem eingesetzten Pulverslurry-Klarlack und dem Sol-Gel-Klarlack ist eine chemische Bindung möglich, d.h. sowohl der Pulverslurry-Klarlack als auch das Sol-Gel-System enthalten jeweils funktionelle Gruppen, die miteinander reagieren können (Prinzip der "korrespondierenden funktionellen Gruppen"). Im Pulverslurry-Klarlack kann sich die korrespondierende funktionelle Gruppe z.B. im Vernetzungsmittel oder bevorzugt im Bindemittel befinden.

Als funktionelle Gruppen kommen beispielsweise Hydroxy-, Siloxan-, Anhydrid-, Isocyanat-, Amin-, Epoxy- und Carboxylgruppen in Betracht. Wesentlich ist, daß einerseits im Pulverslurry-Klarlack eine funktionelle Gruppe vorliegt und andererseits im Sol-Gel-Klarlack, wobei zwischen diesen beiden eine chemische Bindung möglich ist. Beispiele für solche eine chemische Reaktion ermöglichende funktionellen Gruppenpaare sind Epoxidgruppen/Carboxylgruppen, Epoxidgruppen/Hydroxygruppen, funktionelle Gruppen mit reaktivem H-Atom/Isocyanatgruppe, wie Amingruppen/Isocyanatgruppen und Hydroxylgruppen/Isocyanatgruppen. Bevorzugt werden als korrespondierende funktionelle Gruppen das Paar Epoxidgruppe/Carboxylgruppe verwendet.

Erfindungsgemäß ist es hierbei von Vorteil, wenn ein gewisser Anteil des Carboxylgruppen enthaltenden Vernetzungsmittels b) oder Bindemittels b) der Pulverklarlackschicht mit einem gewissen Anteil der Epoxidgruppen im Sol-Gel-Klarlack reagiert.

Die Einführung der korrespondierenden funktionellen Gruppe in den Sol-Gel-Klarlack kann in der organischen oder in der anorganischen Phase stattfinden. Die korrespondierende funktionelle Gruppe ist so zu wählen, daß sie auch noch im fertigen Sol-Gel-Klarlack vorliegt

So kann die korrespondierende funktionelle Gruppe z. B. durch den nicht hydrolysierbaren Rest R des Silans (B) eingeführt werden. Ein Beispiel für ein geeignetes Silan (B) ist 3-Glycidyloxipropyl-trimethoxysilan. Die funktionelle Gruppe kann z. B. auch über die organische Phase eingeführt werden, indem entsprechende Monomere zugerügt werden. So kann eine Epoxidgruppe bei Monomeren mit ethylenisch ungesättigten Doppelbindungen für die organische Phase des Sol-Gel-Klarla z. B. über Methacrylsäure-2,3-epoxypropylester eingeführt werden..

Bereits durch die Reaktion eines kleinen Teils der korrespondierenden funktionellen Gruppen miteinander wird ein zwar grobmaschiges aber für den erfindungsgemäßen Zweck völlig ausreichendes Netzwerk erhalten.

Nach dem Auftrag des Pulverslurry-Klarlacks wird dieser vorgetrocknet und zur Filmbildung gebracht. Dies geschieht bei einer Temperatur, die einerseits oberhalb der Filmbildungstemperatur des Pulverslurry-Klarlacks und andererseits unterhalb der Temperatur liegt, bei der die Vernetzung dieses Pulverslurry-Klarlacks vollständig ist. Ist $T_F$ die Temperatur, bei der der Pulverslurry-Klarlack beginnt, einen Film zu bilden und $T_V$ die Temperatur, bei der der Pulverslurry-Klarlack vollständig vernetzt ist, so gilt für die Temperatur T, bei der gemäß Schritt A die Vortrocknung und auch die Filmbildung stattfindet:

$$T_F < T < T_V$$

Die Temperatur T kann dabei beispielsweise zwischen 60 °C und 150 °C, bevorzugt zwischen 120 °C und 140 °C und insbesondere bei 130 °C liegen, wobei ein Zeitraum von 5 bis 30 min, vorzugsweise 5 bis 15 min und insbesondere 10 min fiir die vor Vortrocknung und Filmbildung erfindungsgemäß von Vorteil ist. Gegebenenfalls wird vor dieser Vortrocknung und Filmbildung bei der Temperatur T eine Vorlüftung des aufgetragenen Pulverslurry-Klarlacks während 5 bis 30 min, vorzugsweise 5 bis 15 min und insbesondere 10 min bei 30 bis 60 °C, vorzugsweise 40 bis 50 °C und insbesondere 50 °C durchgeführt.

Erfindungsgemäß ist es wesentlich, daß die Temperatur T nicht so hoch ist, daß die Vernetzung des Pulverslurry-Klarlacks beendet ist, d.h., der Pulverslurry-Klarlack wird in Schritt A) nicht vollständig, sondern nur teilweise ausgehärtet.

Anschließend wird der Sol-Gel-Klarlack auf diesen vorgetrockneten und zur Filmbildung gebrachten Pulersluny-Klarlack aufgetragen. Der Auftrag kann nach jedem dem Fachmann bekannten Verfahren durchgeführt werden. Bevorzugt wird der Sol-Gel-Klarlack mittels Spritzen aufgetragen. Dabei wird der Sol-Gel-Klarlack bevorzugt als sehr dünner Überzug, z.B. < 10 μm, appliziert.

Anschließend werden die Pulverslurry-Klarlackschicht und die Sol-Gel-Klarlackschicht gemeinsam gehärtet. Dies kann beispielsweise bei Temperaturen von über 85 °C, bevorzugt über 130 °C und unter 170 °C, bevorzugt unter 160 °C durchgeführt werden. Die Dauer des Einbrennens kann breit variieren und dem jeweils vorliegenden Lackaufbau hervorragend angepaßt werden. Im allgemeinen liegt die Einbrennendauer zwischen 10 min und 5 Stunden, bevorzugt liegt sie zwischen 15 min und einer Stunde.

Wird als Vernetzungsmittel für den Pulverslurry-Klarlack Dodecan-1,12-dicarbonsäure verwendet, so ist es vorteilhaft, wenn die in Schritt A) verwendete Temperatur etwa dem Schmelzpunkt der Dodecan-1,12-Dicarbonsäure entspricht. Bevorzugt unterscheidet sich die in Schritt A) verwendete Temperatur dann um nicht mehr als 5°C von dem Schmelzpunkt der Dodecan-1,12-dicarbonsäure.

Die lackierten Substrate, die durch das erfindungsgemäße Verfahren entstehen, zeichnen sich durch eine sehr gute Kratzfestigkeit bei sehr guter Haftung, auch nach der Belastung mit Schwitzwasser, zwischen Pulverslurry-Klarlack und Sol-Gel-Klarlackschicht aus. Auch das Aussehen ist gut. Das erfindungsgemäße Verfahren eignet sich daher insbesondere fiir die Lackierung von Fahrzeugkarosserien, insbesondere von Automobilkarosserien, mit Mehrschichtlackierungen, die industrielle Lackierung, inklusive das Coil-Coating-Verfahren, und die Möbellackierung.

**Beispiel und Vergleichsversuch V1**

**1. Die Herstellung der Ausgangsverbindungen**

**1.1 Die Herstellung eines glycidylgruppenhaltigen Acrylatharzes als Bindemittel a)**

21,1 Teile Xylol wurden in einem geeigneten Reaktionsgefäß vorgelegt und auf 130 °C erwärmt. Zu dieser Vorlage wurden bei 130 °C innerhalb vier Stunden über zwei getrennte Zulaufbehälter der Initiator, bestehend aus 4,5 Teilen TBPEH (tert.-Butylperethylhexanoat) und 4,86 Teilen Xylol, und die Monomerenmischung, bestehend aus 10,78 Teilen Methylmethacrylat, 25,5 Teilen n-Butylmethacrylat, 17,39 Teilen Styrol und 23,95 Teilen Glycidylmethacrylat zudosiert. Anschließend wurde die resultierende Mischung auf 180 °C erwärmt, und im Vakuum wurde bei unter 100 mbar das Lösemittel abgezogen. Es resultierte das Acrylatharz 1.1.

**1.2 Die Herstellung eines hydroxylgruppenhaltigen Acrylatharzes als Polyol c)**

23,83 Teile Xylol wurden in einem geeigneten Reaktionsgefäß vorgelegt und auf 130 °C erwärmt. Zu dieser Vorlage wurden bei 130 °C binnen vier Stunden über zwei getrennte Zulaufbehälter der Initiator, bestehend aus 4,03 TBPEH (tert.-Butylperethylhexanoat) und 4,03 Teilen Xylol, und die Monomerenmischung, bestehend aus 17,45 Teilen Methylmethacrylat, 14,09 Teilen n-Butylmethacrylat, 16,78 Teilen Styrol und 18,79 Teilen Hydroxypropylmethacrylat zudosiert. Hiernach wurden die beiden Zulaufbehälter mit 0,5 Teilen Xylol nachgespült. Anschließend wurde die resultierende Reaktionsmischung auf 180 °C erwärmt, und im Vakuum wurde bei 100 mbar das Lösemittel abgezogen. Es resultierte das Acrylatharz 1.2.

**2. Die Herstellung eines Pulverklarlacks**

62,8 Teile des Acrylatharzes 1.1, 13,5 Teile Dodecandicarbonsäure, 5,0 Teile lösenüttelfreies Tris(alkoxicarbonylamino)triazin, 14,8 Teile Acrylatharz 1.2, 2,0 Teile Tinuvin 1130 (UV-Absorber der Firma Ciba-Geigy), 0,9 Teile Tinuvin 144 (Lichtstabilisator auf der Basis eines gehinderten Amins (HALS) der Firma Ciba-Geigy), 0,4 Teile Additol XL (Verlaufsmittel der Firma Hoechst AG) und 0,4 Teile Benzoin (Entgasungsmittel) wurden innig in einem Henschel-Fluidmischer vermischt, auf einem BUSS PLK 46 Extruder extrudiert und auf einer Hosokawa ACM 2-Mühle vermählen. Der Pulverklarlack wurde er über einem 125 mikrometer Sieb abgesiebt.

Das lösemittelfreie Tris(alkoxicarbonylamino)triazin selbst wurde erhalten, indem man aus der käuflichen Harzlösung (51%-ig in n- Butanol von Firma Cytec) unter Vakuum bei 50 bis 130 °C das Lösemittel abdestillierte und die resultierende Harzschmelze auf ein Pelletierkühlband oder in eine Kühlwanne austrägt.

Es resultierte der Pulverklarlack 2..

### 3. Die Herstellung eines Pulverslurry-Klarlacks

In 400 Teile entsalztes Wasser wurden 0,6 Teile Troykyd D777 (Entschäumer der Firma Troy Chemical Company), 0,6 Teile Orotan 731K (Dispergierhilfsmittel der Firma Rohm & Haas), 0,06 Teile Surfynol TMN 6 (Netzmittel der Firma Air Products) und 16,5 Teile RM8 (nicht-ionischer Assoziativ-Verdicker auf der Basis von Polyurethanen der Firma Rohm & Haas) dispergiert. Anschließend wurden im kleinen Portionen 94 Teile des Pulverklarlacks 2. eingerührt. Anschließend wurden noch einmal 0,6 Teile Troykyd D777, 0,6 Teile Orotan 731K, 0,06 Teile Surfynol TMN 6 und 16,5 Teile RM8 eindispergiert. Anschließend wurden in kleinen Portionen weitere 94 Teile des Pulverklarlacks 2. eingerührt.

Die resultierenden Mischung wurde während 3,5 Stunden in einer Sandmühle gemahlen. Die anschließend gemessene durchschnittliche Teilchengröße lag bei 4 µm. Die Pulverklarlack-Slurry wurden durch einen 50 µm Filter filtriert und mit 0,05 Gew.-%, bezogen auf ihrer Gesamtmenge, Byk 345 (Verlaufsmittel der Firma Byk) versetzt.

Es resultiert die Pulverklarlack-Slurry 3..

### 4. Die Herstellung des erfindungsgemäß zu verwendenden Sol-Gel-Klarlacks

### 4.1 Die Herstellung eines Stammlacks

In einem geeigneten Reaktionsgefäß wurden 30 Teile vollentsalzten Wassers, 40 Teile Ethylglykol, 5 Teile Essigsäure (100 %ig), 66,5 Teile Methyltriethoxisilan und 3,5 Teile 3- Glycidyloxidpropyl-trimethoxisilan vorgelegt und unter Rühren auf 60 °C erhitzt. Nach weiteren 3 Stunden bei 60 °C wurde die Reaktionsmischung unter Rühren auf 90 °C erhitzt und während 2 Stunden bei dieser Temperatur gehalten. Danach wurden 70 Teile der Reaktionsmischung azeotrop abdestilliert. Nach dem Abkühlen auf Zimmertemperatur wurden der Reaktionsmischung 5 Teile Methoxipropylacetat und 0,1 Teile BYK 301 (Verlaufsmittel der Firma BYK) zugesetzt. Es resultierte der Stammlack 4.1.

### 4.2 Die Herstellung eines Polyacrylats zur Modifikation des Sol-Gel-Klarlacks

5 Teil der Acrylsäure, 95 Teile Methylmethacrylat und 4 Teile des Initiators TBPEH (tert.-Butylperethylhexanoat) wurden in 420 Teilen Ethylglykol bei 110 °C während zwei Stunden polymerisiert. Es resultierte die Lösung zur organischen Modifikation 4.2.

### 4.3 Die Herstellung eines Primers (Additivlösung)

15 Teile Ethylglykol, 2 Teile Methacrylsäure-2,3-epoxypropylester, 7,5 Teile 3-Glycidyloxipropyl-trimethoxisilan, 0,5 Teile eines Addukts aus Maleinsäureanhydrid und 3-Aminopropyl-triethoxisilan sowie 0,1 Teile Azodicarbonsäurediamid (GenitronR AZDN - M) wurden unter Rühren während sechs Stunden bei 100 °C miteinander vermischt. Es resultierte der Primer 4.3.

Das Addukt selbst wurde hergestellt, indem man 220 Teile 3- Aminopropyltriethoxisilan und 100 Teile Maleinsäureanhydrid miteinander umsetzte.

### 4.4 Die Herstellung des Sol-Gel-Klarlacks

Der Sol-Gel-Klarlack 4. wurde erhalten, indem man 14,3 Teile des Stammlacks 4.1 (36 %ig in Ethylglykol), 2,14 Teil der der Lösung 4.2, 2,7 Teile Methoxipropylacetat, 0,014 Teile BYK 301, 0,3 Teile des Primers 4.3 und 0,15 Teile Tinuvin 329 (30 %ig in Toluol, Lichtstabilisator der Firma Ciba-Geigy) miteinander vermischte.

### 5. Die Applikation der erfindungsgemäßen Pulverklarlack-Slurry 3 (Beispiel und Vergleichsversuch V1)

Zur Applikation der Pulverklarlack-Slurry 3. wurde ein sogenannter "integrierter Aufbau" vorbereitet, welcher nachfolgend für den Metallicfarbton Dschungelgrün beschrieben wird.

Auf mit einem handelsüblichen Elektrotauchlack kathodisch beschichteten Stahltafeln wurden mit einer Becherpistole zunächst eine Funktionsschicht aus dem Lack Ecoprime[R] von BASF Coatings AG appliziert. Nach fünfminütigem Ablüften bei Raumtemperatur wurde auf diese Schicht in gleicher Weise ein grüner Metallic-Wasserbasislack (Ecostar[R] Dschungelgrün der Firma BASF Coatings AG) appliziert und anschließend während 10 min bei 80 °C vorgetrocknet.

Nach dem Kühlen der Tafeln wurden die Pulverklarlack-Slurry 3. in gleicher Weise aufgetragen und während 10 min bei 50 °C vorgetrocknet und während 10 min bei 130 °C teilvernetzt (Beispiel).

Dieser Verfahrensschritt wurde mit weiteren Tafeln wiederholt, nur daß der Mehrschichtaufbau während 30 min bei 150 °C eingebrannt wurde, so daß eine vollständige Vernetzung resultierte (Vergleichsversuch V1).

Auf die Tafeln des Beispiels und des Vergleichsversuchs V1 wurde anschließend der Sol-Gel-Klarlack 4. appliziert, während 10 min bei 50 °C vorgetrocknet. Anschließend wurden die Lackschichten während 30 Minuten bei 150 °C eingebrannt.

Es resultieren zwei Metallic-Gesamtlackierungen in dem Farbton Dschungelgrün auf den erfindungsgemäßen und den nicht erfindungsgemäßen Prüftafeln 5..

Die Stärke der Naßschichten wurde so gewählt, daß nach dem Einbrennen die Trockenschichtdicken der Funktionsschicht und des Metallic-Wasserbasislacks jeweils bei 15 mikrometer lagen; die Schichtdicke des Klarlacks lag bei 44 μm und die des Sol-Gel-Klarla bei 8 μm.

**6. Die Prüfung der mechanisch-technologischen Eigenschaften der erfindungsgemäßen Prüftafeln 5. (Beispiel ) und der nicht erfindungsgemäßen Prüftafeln 5. (Vergleichsversuch V1)**

**6.1 Kratzfestigkeit und Haftung des Sol-Gel-Klarlacks**

Die Tabelle gibt einen Überblick über die mechanisch-technologischen Tests und die hierbei erhaltenen Ergebnisse.

Tabelle:

| Mechanisch-technologische Eigenschaften der erfindungsgemäßen und der nicht erfindungsgemäßen Prüftafeln 5. | | |
|---|---|---|
| Testmethoden | Beispiel | Vergleichsversuch V1 |
| Kratzprobe nach DBL 7399 [Note 0 bis 5] | 0 | 0 |
| Kratzprobe nach 240 Stunden Schwitzwasser-Konstantklima (SKK) [Note 0 bis 5] | 0 | 0 |
| Gitterschnitt nach DIN 53151 (2 mm) [Note 0 bis 5] | 0 | 5 |
| Gitterschnitt nach 240 Stunden SKK und 24 Stunden Regeneration | 0 | 5 |
| [Note 0 bis 5]: 0 = bester Wert; 5 = schlechtester Wert | | |

Auf Klarlacken, welche vor ihrer Überschichtung mit dem Sol-Gel-Überzug vollständig eingebrannt worden waren (Vergleichsversuch V1), erfolgte somit vollständige Enthaftung des Sol-Gel-Klarlacks.

**6.2 Die Kratzfestigkeit nach dem Bürstentest**

Die Kratzfestigkeit des Sol-Gel-Klarlacks auf den erfindungsgemäßen Prüftafeln 5. wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Zur Herstellung der Prüftafeln wurden zunächst eine Elektrotauchlackierung mit einer Schichtdicke von 18 - 22 μm, dann ein Füller mit einer Schichtdicke von 35 - 40 μm, dann ein schwarzer Basislack mit einer Schichtdicke von 20 - 25 μm und abschließend in erfindungsgemäßer Verfahrensweise der Pulverslurry-Klarlack mit einer Schichtdicke von 40 - 45 μm und der Sol-Gel-Klarlack mit einer Schichtdicke von 8 μm appliziert und jeweils gehärtet. Die Tafeln wurden nach Applikation der Lacke mindestens 2 Wochen bei Raumtemperatur gelagert, bevor die Prüfung durchgeführt wurde.

Der Prüfkörper war mit Nylon-Siebgewebe (Nr. 11, 31 μm Maschenweite, Tg 50 °C) bespanntes Radiergummi (4,5 x 2,0 cm, breite Seite senkrecht zur Kratzrichtung). Das Auflagegewicht betrug 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen. Gemessen wurde der Glanz nach DIN 67530 vor und nach Beschädigung (Meßrichtung senkrecht zur Kratzrichtung).

Hierbei zeigte es sich, daß sich der Glanz durch die Belastung überhaupt nicht änderte, was ein überzeugender Beleg für die außerordentlich hohe Kratzfestigkeit des erfindungsgemäßen Klarlacks ist.

**Patentansprüche**

1. Verfahren zur Herstellung eines lackierten Substrats, bei dem auf das Substrat, auf das gegebenenfalls zunächst ein oder mehrere Überzugsmittel aufgetragen worden sind, ein Pulverslurry-Klarlack und anschließend ein Sol-Gel-Klarlack aufgetragen werden, **dadurch gekennzeichnet, daß**

    A) der Pulverslurry-Klarlack nach dem Auftrag bei einer Temperatur, die einerseits oberhalb der Filmbildungstemperatur des Pulverslurry-Klarlacks und andererseits unterhalb der Temperatur liegt, bei der die Vernetzung dieses Pulverslurry-Klarlacks vollständig ist, vorgetrocknet und zur Filmbildung gebracht wird,

    B) anschließend der Sol-Gel-Klarlack aufgetragen wird, und

    C) schließlich beide Überzüge gemeinsam gehärtet werden,

    wobei der Pulverslurry-Klarlack bei Schritt A) nur teilweise ausgehärtet wird und sowohl der Pulverslurry-Klarlack als auch der Sol-Gel-Klarlack jeweils funktionelle Gruppen enthalten, die nach dem Prinzip der korrespondierenden funktionellen Gruppen miteinander reagieren können, so daß eine chemische Bindung zwischen Pulverslurry Klarlack und Sol-Gel-Klarlack resultiert.

2. Verfahren nach Anspruch 1, **dadurch gekennzeichnet, daß** ein Pulverslurry-Klarlack, der Epoxidgruppen und Carboxylgruppen als funktionelle Gruppen enthält, und ein Sol-Gel-Klarlack, der Epoxidgruppen als funktionelle Gruppen enthält, verwendet wird.

3. Verfahren nach Anspruch 1 oder 2, **dadurch gekennzeichnet, daß** ein Pulverslurry-Klarlack verwendet wird, der aus einem Pulver-Klarlack, der wenigstens ein epoxidgruppenhaltiges Bindemittel, insbesondere ein epoxidgruppenhaltiges Polyacrylatharz, und wenigstens ein carboxylgruppenhaltiges Vernetzungsmittel, insbesondere geradkettige, aliphatische Dicarbonsäuren und/oder carboxyfunktionelle Polyester, enthält, und einer wäßrigen Dispersion, die wenigstens einen nichtionischen Verdicker und ein Dispergiermittel in Form einer nichtionischen Polyurethandispersion enthält, besteht.

4. Verfahren nach Anspruch 3, **dadurch gekennzeichnet, daß** als Vernetzungsmittel Dodecan-1,12-dicarbonsäure eingesetzt wird.

5. Verfahren nach Anspruch 4, **dadurch gekennzeichnet, daß** die bei Schritt A) verwendete Temperatur etwa dem Schmelzpunkt der Dodecan-1,12-dicarbonsäure entspricht.

6. Verfahren nach einem der Ansprüche 1 bis 5, **dadurch gekennzeichnet, daß** die Sol-Gel-Klarlackschicht in einer Schichtdicke von höchstens 10 μm aufgetragen wird.

7. Lackiertes Substrat, erhältlich nach einem Verfahren, bei dem auf das Substrat, auf das gegebenenfalls zunächst ein oder mehrere Überzugsmittel aufgetragen worden sind, ein Pulverslurry-Klarlack und anschließend ein Sol-Gel-Klarlack aufgetragen werden, **dadurch gekennzeichnet, daß**

    B) der Pulverslurry-Klarlack nach dem Auftrag bei einer Temperatur, die einerseits oberhalb der Filmbildungstemperatur des Pulverslurry-Klarlacks und andererseits unterhalb der Temperatur liegt, bei der die Vernetzung dieses Pulverslurry-Klarlacks vollständig ist, vorgetrocknet und zur Filmbildung gebracht wird,

B) anschließend der Sol-Gel-Klarlack aufgetragen wird, und

C) schließlich beide Überzüge gemeinsam gehärtet werden,

wobei der Pulverslurry-Klarlack bei Schritt A) nur teilweise ausgehärtet wird und sowohl der Pulverslurry-Klarlack als auch der Sol-Gel-Klarlack jeweils funktionelle Gruppen enthalten, die nach dem Prinzip der korrespondierenden funktionellen Gruppen miteinander reagieren können, so daß eine chemische Bindung zwischen Pulverslurry - Klarlack und Sol-Gel-Klarlack resultiert.

8. Lackiertes Substrat nach Anspruch 7, **dadurch gekennzeichnet, daß** ein Pulverslurry-Klarlack, der Epoxidgruppen und Carboxylgruppen als funktionelle Gruppen enthält, und ein Sol-Gel-Klarlack, der Epoxidgruppen als funktionelle Gruppen enthält, verwendet wird.

9. Lackiertes Substrat nach Anspruch 7 oder 8, **dadurch gekennzeichnet, daß** ein Pulverslurry-Klarlack verwendet wird, der aus einem Pulver-Klarlack, der wenigstens ein epoxidgruppenhaltiges Bindemittel, insbesondere ein epoxidgruppenhaltiges Polyacrylatharz, und wenigstens ein carboxylgruppenhaltiges Vernetzungsmittel, insbesondere geradkettige, aliphatische Dicarbonsäuren und/oder carboxyfunktionelle Polyester, enthält, und einer wäßrigen Dispersion, die wenigstens einen nichtionischen Verdicker und ein Dispergiermittel in Form einer nichtionischen Polyurethandispersion enthält, besteht.

10. Lackiertes Substrat nach Anspruch 9, **dadurch gekennzeichnet, daß** als Vemetzungsmittel Dodecan-1,12-dicarbonsäure eingesetzt wird.

11. Lackiertes Substrat nach Anspruch 10, **dadurch gekennzeichnet, daß** die bei Schritt A) verwendete Temperatur etwa dem Schmelzpunkt der Dodecan-1,12-dicarbonsäure entspricht.

12. Lackiertes Substrat nach einem der Ansprüche 7 bis 11, **dadurch gekennzeichnet, daß** die Sol-Gel-Klarlackschicht in einer Schichtdicke von höchstens 10 µm aufgetragen wird.

13. Lackiertes Substrat nach einem der Ansprüche 7 bis 12, **dadurch gekennzeichnet, daß** es sich bei dem lackierten Substrat um eine Fahrzeugkarosserie, insbesondere eine Automobilkarosserie, mit Mehrschichtlackierung handelt.

14. Verwendung des lackierten Substrats nach einem der Ansprüche 7 bis 13 für Fahrzeuge, insbesondere Automobile.

**Claims**

1. A process for producing a coated substrate, in which a powder slurry clearcoat material and, subsequently, a sol-gel clearcoat material are applied to the substrate to which, if desired, one or more coating compositions are applied first of all, where

A) following application at a temperature on the one hand above the film formation temperature of the powder slurry clearcoat material and on the other hand below the temperature at which the crosslinking of this powder slurry clearcoat material is complete, the powder slurry clearcoat material is predried and induced to form a film,

B) subsequently the sol-gel clearcoat material is applied, and

C) finally both coatings are cured conjointly,

the powder slurry clearcoat material being only partly cured in step A) and both the powder slurry clearcoat material and the sol-gel clearcoat material each containing functional groups, which can be reacted with one another in accordance with the principle of corresponding functional groups, such that a chemical bond results between the powder slurry clearcoat material and the sol-gel clearcoat material.

2. The process as claimed in claim 1, wherein a powder slurry clearcoat material containing epoxide groups and carboxyl groups as functional groups, and a sol-gel clearcoat material containing epoxide groups as functional groups, are used.

3. The process as claimed in claim 1 or 2, wherein a powder slurry clearcoat material is used which comprises a powder clearcoat material comprising at least one binder containing epoxide groups, especially a polyacrylate resin containing epoxide groups, and at least one carboxyl-containing crosslinking agent, especially straight-chain, aliphatic dicarboxylic acids and/or carboxy-functional polyesters, and an aqueous dispersion comprising at least one nonionic thickener and a dispersant in the form of a nonionic polyurethane dispersion.

4. The process as claimed in claim 3, wherein dodecane-1,12-dicarboxylic acid is used as crosslinking agent.

5. The process as claimed in claim 4, wherein the temperature used in step A) corresponds approximately to the melting point of dodecane-1,12-dicarboxylic acid.

6. The process as claimed in any of claims 1 to 5, wherein the sol-gel clearcoat film is applied in a film thickness of not more than 10 μm.

7. A coated substrate obtainable by a process in which a powder slurry clearcoat material and, subsequently, a sol-gel clearcoat material are applied to the substrate to which, if desired, one or more coating compositions have been applied first of all, wherein

   A) following application at a temperature on the one hand above the film formation temperature of the powder slurry clearcoat material and on the other hand below the temperature at which the crosslinking of this powder slurry clearcoat material is complete, the powder slurry clearcoat material is predried and induced to form a film,

   B) subsequently the sol-gel clearcoat material is applied, and

   C) finally both coatings are cured conjointly,

   the powder slurry clearcoat material being only partly cured in step A) and both the powder slurry clearcoat material and the sol-gel clearcoat material each containing functional groups, which can be reacted with one another in accordance with the principle of corresponding functional groups, such that a chemical bond results between the powder slurry clearcoat material and the sol-gel clearcoat material.

8. The coated substrate as claimed in claim 7, wherein a powder slurry clearcoat material containing epoxide groups and carboxyl groups as functional groups, and a sol-gel clearcoat material containing epoxide groups as functional groups, are used.

9. The coated substrate as claimed in claim 7 or 8, wherein a powder slurry clearcoat material is used which comprises a powder clearcoat material comprising at least one binder containing epoxide groups, especially a polyacrylate resin containing epoxide groups, and at least one carboxyl-containing crosslinking agent, especially straight-chain, aliphatic dicarboxylic acids and/or carboxy-functional polyesters, and an aqueous dispersion comprising at least one nonionic thickener and a dispersant in the form of a nonionic polyurethane dispersion.

10. The coated substrate as claimed in claim 9, wherein dodecane-1,12-dicarboxylic acid is used as crosslinking agent.

11. The coated substrate as claimed in claim 10, wherein the temperature used in step A) corresponds approximately to the melting point of dodecane-1,12-dicarboxylic acid.

12. The coated substrate as claimed in any of claims 7 to 11, wherein the sol-gel clearcoat film is applied in a film thickness of not more than 10 μm.

13. The coated substrate as claimed in any of claims 7 to 12, comprising a vehicle body, especially an automobile body, with a multicoat coating system.

14. The use of the coated substrate as claimed in any of claims 7 to 13 for vehicles, especially automobiles.

**Revendications**

1. Procédé pour la production d'un subjectile peint, dans lequel on applique un vernis en suspension de poudre et ensuite un vernis sol-gel sur le subjectile sur lequel ont été éventuellement appliqués d'abord un ou plusieurs revêtements, **caractérisé en ce que**

   A) le vernis en suspension de poudre après l'application à une température qui se situe d'une part au-dessus de la température de formation de feuil du vernis en suspension de poudre et d'autre part au-dessous de la température à laquelle la réticulation de ce vernis en suspension de poudre est totale, est préséché et amené à la formation d'un feuil,
   B) on applique ensuite le vernis sol-gel et
   C) les deux revêtements sont enfin durcis ensemble,

   le vernis en suspension de poudre dans l'étape A) n'étant que partiellement durci et aussi bien le vernis en suspension de poudre que le vernis sol-gel contenant chacun des groupes fonctionnels pouvant réagir les uns avec les autres selon le principe des groupes fonctionnels correspondants, de sorte qu'il en résulte une liaison chimique entre vernis en suspension de poudre et vernis sol-gel.

2. Procédé selon la revendication 1, **caractérisé en ce qu'**on utilise un vernis en suspension de poudre qui contient en tant que groupes fonctionnels des groupes époxy et des groupes carboxy, et un vernis sol-gel qui contient en tant que groupes fonctionnels des groupes époxy.

3. Procédé selon la revendication 1 ou 2, **caractérisé en ce qu'**on utilise un vernis en suspension de poudre qui consiste en un vernis en poudre qui contient au moins un liant contenant des groupes époxy, en particulier une résine polyacrylate contenant des groupes carboxy, et au moins un agent de réticulation contenant des groupes carboxy, en particulier des acides dicarboxyliques aliphatiques à chaîne droite et/ou des polyesters à fonction carboxy, et en une dispersion aqueuse qui contient au moins un épaississant non ionique et un dispersant sous forme d'une dispersion de polyuréthanne non ionique.

4. Procédé selon la revendication 3, **caractérisé en ce qu'**on utilise comme agent de réticulation l'acide dodécane-1,12-dicarboxylique.

5. Procédé selon la revendication 4, **caractérisé en ce que** la température utilisée dans l'étape (A) correspond approximativement au point de fusion de l'acide dodécane-1,12-dicarboxylique.

6. Procédé selon l'une quelconque des revendications 1 à 5, **caractérisé en ce que** la couche de vernis sol-gel est appliquée en une épaisseur de couche d'au maximum 10 µm.

7. Subjectile peint, pouvant être obtenu par un procédé dans lequel on applique un vernis en suspension de poudre et ensuite un vernis sol-gel sur le subjectile sur lequel ont été éventuellement appliqués d'abord un ou plusieurs revêtements, **caractérisé en ce que**

   A) le vernis en suspension de poudre après l'application à une température qui se situe d'une part au-dessus de la température de formation de feuil du vernis en suspension de poudre et d'autre part au-dessous de la température à laquelle la réticulation de ce vernis en suspension de poudre est totale, est préséché et amené à la formation d'un feuil,
   B) on applique ensuite le vernis sol-gel et
   C) les deux revêtements sont enfin durcis ensemble,

   le vernis en suspension de poudre dans l'étape A) n'étant que partiellement durci et aussi bien le vernis en suspension de poudre que le vernis sol-gel contenant des groupes fonctionnels pouvant réagir les uns avec les autres selon le principe des groupes fonctionnels correspondants, de sorte qu'il en résulte une liaison chimique entre vernis en suspension de poudre et vernis sol-gel.

8. Subjectile peint selon la revendication 7, **caractérisé en ce qu'**on utilise un vernis en suspension de poudre qui contient en tant que groupes fonctionnels des groupes époxy et des groupes carboxy, et un vernis sol-gel qui contient en tant que groupes fonctionnels des groupes époxy.

9. Subjectile peint selon la revendication 7 ou 8, **caractérisé en ce qu'**on utilise un vernis en suspension de poudre qui consiste en un vernis en poudre qui contient au moins un liant contenant des groupes époxy, en particulier une résine polyacrylate contenant des groupes carboxy, et au moins un agent de réticulation contenant des groupes carboxy, en particulier des acides dicarboxyliques aliphatiques à chaîne droite et/ou des polyesters à fonction carboxy, et en une dispersion aqueuse qui contient au moins un épaississant non ionique et un dispersant sous forme d'une dispersion de polyuréthanne non ionique.

10. Subjectile peint selon la revendication 9, **caractérisé en ce qu'**on utilise comme agent de réticulation l'acide dodécane-1,12-dicarboxylique.

11. Subjectile peint selon la revendication 10, **caractérisé en ce que** la température utilisée dans l'étape (A) correspond approximativement au point de fusion de l'acide dodécane-1,12-dicarboxylique.

12. Subjectile peint selon l'une quelconque des revendications 7 à 11, **caractérisé en ce que** la couche de vernis sol-gel est appliquée en une épaisseur de couche d'au maximum 10 µm.

13. Subjectile peint selon l'une quelconque des revendications 7 à 12, **caractérisé en ce que** le subjectile peint consiste en une carrosserie de véhicule, en particulier une carrosserie d'automobile, avec un revêtement de peinture multicouche.

14. Utilisation du subjectile peint selon l'une quelconque des revendications 7 à 13, pour des véhicules, en particulier des automobiles.